# EUROPEAN PATENT APPLICATION

(11) **EP 2 458 197 A1**
(43) Date of publication of application: **30.05.2012**
(21) Application number: 10802295.5
(22) Date of filing: 21.07.2010
(51) Int. Cl.: F03B 7/00

(54) **HYDROELECTRIC POWER GENERATING EQUIPMENT**

(30) Priority: 21.07.2009 JP 2009170175
(71) Applicant: Eco Technology Co., Ltd., Aichi 464-0834 (JP)
(72) Inventor: KATO, Masaharu, Nagoya-shi Aichi 464-0834 (JP)
(74) Representative: Oxley, Robin John George
(86) International application number: PCT/JP2010/062268
(87) International publication number: WO 2011/010675

(57) **Abstract**

Disclosed is hydroelectric power generating equipment (1) wherein, since the equipment is employed in a mode in which all water turbine vanes (22) are concurrently immersed, the immersed volume of a water turbine (20) as a whole is greatly increased, and a considerable portion of the weight of the actual water turbine (20) and the weight of a generator (40) that is connected to the water turbine (20) can be borne by the total amount of buoyancy acting on the water turbine vanes (22) . This makes it possible to reduce the weight of and space taken up by the support structure section of the water turbine (20) and generator (40), thereby making it possible to effectively reduce the space and construction costs involved in installing the hydroelectric power generating equipment (1). In this way, by raising the efficiency of conversion of water flow energy to water turbine rotation energy and more effectively utilising the buoyancy acting on the actual water turbine, it is possible to provide hydroelectric power generating equipment in which the weight of the water turbine and the generator can be efficiently supported by a more compact mechanism.

## Description

### TECHNICAL FIELD

This invention relates to a hydroelectric power generating equipment.

### BACKGROUND

There is employed a structure of a water turbine in which a water flow collides with only a lower part of the water turbine in the case in which the water turbine is disposed in such manner that a rotating axis is parallel with a water surface to carry out a hydroelectric power generation. In the case in which the power generation is carried out by using a flow in a river or a waterway, it is hard to avoid a large scale construction for regulating a flow rate or a water level. The construction is very expensive, and furthermore, there is a fear that a landscape around a river might be broken. An influence on an agriculture or a fishing industry with a flood control is also indicated more and more. Therefore, Patent Documents 1 and 2 propose a hydroelectric power generating equipment which support a water turbine on a water surface in a floating configuration and vertically move the water turbine depending on a change in a water level, thereby influencing a rotating state of the water turbine through the water level with difficulty, and furthermore, capable of generating a power flexibly irrespective of the water level or a quantity of water.

### Related Art Document

### PATENT DOCUMENT

Patent Document 1 : Japanese Unexamined Patent Publication No. 2008-267369
Patent Document 2 : Japanese Unexamined Patent Publication No. 2008-163784

### SUMMARY OF THE INVENTION

### PROBLEMS TO BE SOLVED BY THE INVENTION

However, the hydroelectric power generating equipment described in the Patent Documents 1 and 2 have such a method that a water flow does not collide with an upper part of the water turbine at all. For this reason, they have a disadvantage that a conversion efficiency of a water flow energy into a water turbine rotation energy, and furthermore, a power generation efficiency is not so high. In the Patent Document 1, there is employed a mechanism in which a water turbine and a power generator are attached to both ends of an arm of a turning type and a dead weight of the water turbine is caused to be well-balanced with the power generator and is thus floated by the principle of leverage, and there is a problem in that a buoyancy acting on the water turbine itself is rarely utilized effectively. As a result, there is a problem in that a scale of the turning arm for converting a load of the power generator into a buoyancy of the water turbine is large, resulting in an increase in an installation space. Similarly, the hydroelectric power generating equipment in the Patent Document 2 employs the structure in which a float is provided separately from the water turbine, and the water turbine and the power generator are floated together by a buoyancy. In order to float the water turbine together with a heavy power generator, however, it is necessary to use a considerably large-sized float. Similarly, a problem of an installation space tends to be caused.

It is an object of the invention to provide hydroelectric power generating equipment in which a conversion efficiency from a water flow energy into a water turbine rotation energy is high and weights of a water turbine and a power generator can be efficiently supported by a more compact mechanism through a more effective utilization of a buoyancy acting on the water turbine itself.

### MEANS FOR SOLVING THE PROBLEMS AND ADVANTAGEOUS EFFECTS OF THE INVENTION

In order to solve the problems, hydroelectric power generating equipment according to the invention is characterized by including: a water turbine having a plurality of water turbine vanes disposed integrally and rotatably around a rotating shaft which intersects with (for example, is orthogonal to) a water surface of a power generating water flow; a power generator attached to an upper end side of the rotating shaft of the water turbine in such a configuration that a whole body is positioned above the water surface and converting a rotation energy of the water turbine into an electric power; and water turbine supporting means for supporting the water turbine and the power generator in such a manner that at least lower end sides of all of the water turbine vanes in an axial direction of the rotating shaft are simultaneously immersed in the power generating water flow.

The water turbine having a plurality of water turbine vanes disposed integrally and rotatably around a rotating shaft which intersects with (for example, is orthogonal to) a water surface of a power generating water flow is supported by the water turbine supporting means in such a manner that at least lower end sides of all of the water turbine vanes in an axial direction of the rotating shaft are simultaneously immersed in the power generating water flow.

According to the structure of the hydroelectric power generating equipment in accordance with the invention, there is obtained using a configuration in which all of the water turbine vanes are immersed at the same time. As a result, an immersed volume of the whole water turbine is remarkably increased so that a weight of the water turbine itself and a considerable part of a weight of the power generator to be connected to the water turbine can be accepted by a sum of a buoyancy acting on each of the water turbine vanes. As a result, it is possible to reduce the weight of the support structure portion of the water turbine and the power generator and to carry out space saving. Thus, it is possible to effectively reduce a space for installing the hydroelectric power generating equipment and a construction cost.

In the invention, it is possible to use the water turbine which is constituted, in an orthogonal section to an axis of the rotating shaft, in such a manner that the water turbine vane is set to be a concave curved surface in which a rear vane surface is retracted to a forward side in a reference rotating direction, a front vane surface is set to be a convex curved surface which is protruded to the forward side in the reference rotating direction and has a greater curve depth than the rear vane surface, and the front vane surface has a curvature which is a maximum in a curved nose portion and is decreased from the curved nose portion toward a vane inner edge side and a vane outer edge side respectively, takes a shape of a flow line in which a length of a first surface reaching the vane outer edge from the curved nose portion is greater than a length of a second surface reaching a vane inner edge similarly, the first surface and the second surface are formed to function as a high speed water flow passing surface and a low speed water flow passing surface respectively in such a manner that a speed of a relative water flow generated along the first surface from the curved nose portion toward the vane outer edge is higher than that of a relative water flow generated along the second surface toward the vane inner edge similarly when a relative water flow is received from the forward side in the reference rotating direction at the front vane surface, and a lift torque based on a difference in a flow speed of the relative water flow between the high speed water flow passing surface and the low speed water flow passing surface which is generated in the water turbine vane is generated in such an orientation as to rotate the water turbine vane in the reference rotating direction at the rear vane surface side. In each of the water turbine vanes, the front vane surface takes a shape of a curved flow line in a peculiar configuration in which the high speed water flow passing surface and the low speed water flow passing surface are formed. In the case in which the water flow is received from the rear vane surface side, therefore, it is possible to convert the water flow into a running torque while receiving the water flow efficiently over a concave surface constituting the rear vane surface. On the other hand, also in the case in which the water flow is received in a configuration of head water as seen from the front vane surface side, it is possible to generate a torque for rotating the water turbine against the water flow by a lifting force based on a flow speed difference in a relative water flow between the high speed water flow passing surface and the low speed water flow passing surface. In other words, the torque for rotating the water turbine is generated by setting the front vane surface side to be the rotating forward side irrespective of the side where the water turbine vane of the water turbine constituted by the water turbine vane having the shape described above is present with respect to the rotating axis. Therefore, any of the water turbine vanes in the power generating water flow effectively contributes to the generation of the running torque. As a result, an efficiency for converting the water flow into a water turbine rotating force, that is, a power generating force can be enhanced dramatically, and a starting property of the water turbine at the low flow speed can also be improved considerably.

The water turbine can be constituted to include a first water turbine which is disposed in such a configuration that a rotating axis is coincident with a first position on a reference axis, and carries out a rotation in a first direction upon receipt of the water flow, and a second water turbine which is disposed in a second position set below the first position over the reference axis and carries out a rotation in a reverse direction to the first water turbine upon receipt of the water flow. In this case, the power generator can be constituted to include a first rotor which is provided with a field magnet and carries out a rotation integrally with one of the first water turbine and the second water turbine, and a second rotor which carries out a rotation integrally with the other of the first water turbine and the second water turbine in a reverse direction to the first rotor and is provided with a power generating coil to be excited by the field magnet.

According to the structure, the first rotor provided with the field magnet and the rotor provided with the power generating coil are connected to the water turbines rotated in the reverse directions to each other when the water flow is received in the same direction. Consequently, it is possible to cause the relative rotating speeds of the field magnet and the power generating coil to be a double of the rotating speed of the water turbine, thereby enhancing a power generation efficiency. Moreover, the field magnet and the power generating coil which have comparatively large weights concentrate around the rotating axis of the water turbine in the form of the first rotor and the second rotor, respectively. As a result, a kind of flywheel effect is caused and in the case in which the flow speed is not constant, it is possible to stabilize the rotation. Furthermore, the first rotor and the second rotor are rotated in the reverse directions to each other together with the upper and lower water turbines. Therefore, it is possible to cancel a rotating torsional load to be applied to the rotating shaft of the water turbine, which is also advantageous in respect of the strength of the structure. As described above, the power generator of this type generates a very great running torque. However, there is employed a structure of a water turbine in which a torque conversion efficiency of a hydraulic power is very high as described above. Consequently, it is possible to rotate the power generator stably at a high speed, thereby obtaining a high power generation efficiency.

In this case, it is possible to employ a structure in which a first rotating shaft constituting a rotating shaft of the first water turbine positioned above is formed cylindrically and an upper end of the first rotating shaft is coupled to one of the first rotor and the second rotor in the power generator so as to be integrally rotatable, while an upper end of a second rotating shaft constituting a rotating shaft of the second water turbine is coupled to the other of the first rotor and the second rotor so as to be integrally rotatable, and a lower end side of the second rotating shaft is caused to coaxially penetrate through an inner part of the first rotating shaft taking a cylindrical shape and is coupled to the second water turbine so as to be integrally rotatable. With the structure described above, the power generator is disposed further above the two water turbines provided adjacently in a vertical direction. By a buoyancy acting on the upper and lower water turbines, therefore, it is possible to further implement a reduction in a weight and space saving in the support structure portion of the water turbine and the power generator. The rotating shaft of the second water turbine positioned on the lower side is inserted into the inside of the rotating shaft of the first water turbine positioned on the upper side. Consequently, it is possible to considerably simplify the structure for connecting the upper and lower water turbines to be rotated in the reverse directions to each other to the first rotor and the second rotor in the power generator.

It is possible to constitute the power generator as an axial gap type power generator in which the power generating coils constituted to be coreless and flat are arranged around the rotating axis in a configuration in which the axial direction is coincident with the direction of the rotating axis in the second rotor, and the field magnets are arranged around the rotating axis in a magnetization configuration in the direction of the rotating axis in the first rotor in such a manner that the power generating coil and the field magnet are opposed to each other in a configuration to form an air gap in the direction of the rotating axis. According to the structure, it is possible to achieve the following effects by employing the power generator of the axial gap type. First of all, the field magnet and the power generating coil are opposed to each other in the axial direction. Referring to the first rotor provided with the field magnet and the second rotor provided with the power generating coil, therefore, the weights of the field magnet and the power generating coil concentrate in almost the same radial positions so that a difference is made in a moment of inertia around the rotating axis with difficulty. As a result, the rotational inertia forces of the two water turbines to be connected to the power generator are imbalanced with difficulty, and a power generating characteristic can easily be stabilized in a low speed rotation. On the other hand, the effect for cancelling the rotating torsional load to be applied to the rotating shaft can be enhanced considerably and can also act advantageously in respect of the strength of the structure. Moreover, both the power generating coil and the field magnet can be constituted to be thin, and the power generating coil is of a coreless type. Therefore, it is possible to greatly contribute to a reduction in the weight of the power generating equipment. Furthermore, the loads of the power generating coil and the field magnet comparatively concentrate in the axial direction. Therefore, a repulsive field force of the coil and the magnet which has the flywheel effect enhanced considerably is generated in the axial direction. Consequently, a fluctuation in the rotating shaft or cogging is caused with difficulty.

Moreover, the first rotor can have a structure in which there is provided a disk-shaped rotor body having an opposed surface to the power generating coil of the second rotor to which the field magnet is attached, and the first rotating shaft formed separately from the second rotating shaft is coupled to the rotor body integrally and rotatably. By attaching the field magnet to the disk-shaped rotor body, it is possible to flatten the first rotor, thereby contributing to a further enhancement in the flywheel effect. It is preferable to constitute the field magnet by a flat permanent magnet which is magnetized in a vertical direction. In order to implement a power generator having a small size and a high power, particularly, it is effective to employ a rare earth magnet capable of generating a ferromagnetic field (for example, a rare earth (Nd, Dy, Pr) - Fe - B based magnet or a rare earth (Sm) - Co based magnet or the like) through a flat type magnet. The flat magnet indicates a magnet in which t/s is smaller than one (particularly, smaller than 0.5) wherein s represents a square root of a sectional area of a main surface (a magnetized surface) and t represents a dimension in a vertical direction.

Moreover, it is possible to have a structure in which the first rotor includes a disk-shaped auxiliary rotor body in an opposing form from the opposite side to the rotor body in the axial direction with respect to the power generating coil of the second rotor, and an auxiliary field magnet having a reverse polarity to the field magnet is attached into a corresponding position to the field magnet at the rotor body side in an opposed surface to the power generating coil of the auxiliary rotor body. In this case, the rotor body and the auxiliary rotor body are coupled to each other integrally and rotatably through a peripheral wall portion surrounding the second rotor in a circumferential direction at an outer peripheral edge, and the rotor body, the peripheral wall portion and the auxiliary rotor body can constitute a field yoke formed by a soft magnetic metal material. With the structure described above, it is possible to generate a magnetic field concentrating more strongly in the axial direction between the field magnet and the auxiliary field magnet, and the rotor body, the auxiliary rotor body and the peripheral wall portion constitute the field yoke formed by the soft magnetic metal material (for example, a permalloy or the like). Consequently, it is possible to considerably decrease a leakage magnetic field and to enhance a power generation efficiency still more. At this time, the first rotor has a casing-shaped structure for accommodating the second rotor. By a structure in which the cylindrical first rotating shaft of the first water turbine positioned above is connected to the first rotor and the second rotating shaft to be linked to the second rotor penetrates through the casing-shaped first rotor and the first rotating shaft respectively and connected to the second water turbine positioned below, it is possible to simplify a connecting structure of the respective rotating shafts of the two water turbines to the power generator.

If the water turbine vane is formed as a structure which has a smaller apparent specific gravity than water, a dead weight of the water turbine vane is reduced from a full load to be supported. Consequently, it is possible to enhance a contribution ratio of a buoyancy of the water turbine for supporting a heavy power generator, thereby contributing to a further reduction in the weight of the whole power generating equipment. More specifically, it is also possible to solidly constitute the whole water turbine vane by plastics (including porous plastics and fiber reinforced plastics as a concept). However, the weight reducing effect is more remarkable in the case of a structure in which the outer surface portion of the water turbine vane is constituted by a hollow shell and an inner part thereof is maintained to be hollow or is filled with a filling material having a smaller apparent specific gravity than water. In this case, it is suitable to employ a structure in which the shell is constituted by a metal having a corrosion resistance (which is more excellent than carbon steel or the like), for example, stainless steel and an inner part thereof is filled with the filling material in order to enable a sufficient support of a hydrostatic pressure acting on the surface of the water turbine vane in the water. For the filling material, it is possible to employ a resin foam material such as an urethane foam or a polystyrene foam. In this case, it is possible to employ the step of previously preparing a hollow metal shell and injecting and filling a resin foam into an inner part thereof.

The water turbine supporting means can be constituted to have a power generator supporting portion fixed to a support base which cannot be moved relatively with the water flow and supporting the power generator above the water surface. The water turbine can be attached to the power generator supported by the power generator supporting portion in a suspending configuration at the upper end of the rotating shaft. By providing the water turbine in the suspending configuration with respect to the power generator, it is not necessary to dispose the structure for supporting the lower end of the water turbine on a water bottom. Consequently, an installing construction on the water bottom side is not required. Therefore, it is possible to contribute to a considerable reduction in a construction cost and a construction period of the power generating equipment. A part of the dead weights of the power generator and the water turbine can be supported by the buoyancy acting on the water turbine. Thus, it is possible to reduce a load capacity of the power generator supporting portion, thereby contributing to a reduction in a weight and a size. In particular, if the water turbine vane is formed as a structure which has a smaller apparent specific gravity than water, it is possible to simply apply the buoyancy acting on the water turbine vane to a supporting force of the power generator (or a peripheral part such as a protecting frame which will be described below, or the like). Thus, it is possible to contribute to a further reduction in a weight and a size in the power generator supporting portion.

As a power generating water flow, it is possible to employ a flow in a waterway such as a river, an irrigation channel or a canal, and furthermore, to utilize a tidal current in the sea. In the case in which the power generating water flow is formed in a waterway having a quay wall at both sides in a transverse direction of the flow, particularly, the power generator supporting portion is constituted to include a support beam having both ends supported in such a configuration that each of the quay walls in the waterway is set to be the support base, and a power generator attaching portion which is provided in a middle position in a longitudinal direction of the support beam and to which the power generator is attached. Referring to the power generator supporting portion, consequently, an installing portion into the water is not generated, resulting in a contribution to a reduction in a construction cost and a construction period. As described above, a part of the support load of the power generator is accepted by the buoyancy acting on the water turbine. Therefore, a flexure load acting on the support beam can be relieved so that the weight of the support beam can be reduced.

It is possible to provide a protecting frame below the power generator attaching portion, the protecting frame protecting a periphery of the water turbine fixed to the power generator attached to the power generator attaching portion in the suspending configuration while permitting a passage of a water flow. By providing the protecting frame, it is possible to effectively reduce a disadvantage that a floating substance such as a drift wood collides with or gets into the water turbine. In this case, if a bottom part of the protecting frame is provided with a bearing for rotatably supporting the lower end of the rotating shaft of the water turbine, it is possible to support the rotating shaft of the water turbine in the water more stably.

In the hydroelectric power generating equipment according to the invention, it is also possible to constitute the whole power generating equipment as a floating type power generating equipment floated in the water when the buoyancy which might be generated in the immersion of the whole water turbine vane exceeds the weight of the whole power generating equipment. More specifically, the water turbine supporting means can be constituted to have a buoyancy applying portion for applying a buoyancy in such a manner that all of the water turbine vanes are simultaneously immersed in a state in which at least the lower end sides in the axial direction of the rotating shaft do not come in contact with a water bottom with respect to the power generating water flow in a water turbine power generating assembly integrating the power generator with the water turbine, while the whole power generator is positioned above the water surface, and to support the water turbine power generating assembly in a floating configuration with respect to the water surface. Consequently, the water turbine power generating assembly is supported in a floating form over the water surface. Also in the case of a vertical fluctuation in a water level of the power generating water flow, therefore, the whole water turbine power generating assembly vertically changes a position corresponding to the water level. As a result, the sectional area of the water flow colliding with the water turbine can be held to be constant. Consequently, it is possible to carry out a stable power generation. Moreover, an immersion depth of the water turbine is constant. Therefore, a hydrostatic pressure acting on the water turbine is also constant. Also in the case in which the water level is extremely raised, for example, it is possible to prevent a drawback that the hydrostatic pressure acting on the water turbine vane is excessively increased. With the structure, by forming the water turbine vane as a structure which has a smaller apparent specific gravity than water, it is possible to use the water turbine vane as a buoyancy applying portion, thereby simplifying the structure of the water turbine power generating assembly more greatly.

The water turbine power generating assembly can include a power generator attaching portion having an upper surface side to which the power generator is attached, and a protecting frame can be provided below the power generator attaching portion, the protecting frame protecting a periphery of the water turbine fixed to the power generator attached to the power generator attaching portion in the suspending configuration while permitting a passage of a water flow. In this case, the buoyancy applying portion can be constituted to apply the buoyancy in such a manner that the protecting frame does not come in contact with the water bottom together with the water turbine. By providing the protecting frame, it is possible to effectively reduce a drawback that a floating substance such as a drift wood collides with or gets into the water turbine. Also in this case, the bottom part of the protecting frame can be provided with a bearing for rotatably supporting the lower end of the rotating shaft of the water turbine.

In the case in which the position of the water turbine power generating assembly disposed in the floating configuration over the water surface in the flow direction in the water flow is to be regulated, it is preferable that a water turbine power generating assembly floating support structure portion for supporting the water turbine power generating assembly in order to regulate a movement in the direction of the water flow and to permit a vertical movement depending on a water level should be provided in such a form as to be fixed to a support base which cannot be moved relatively with the water flow. Consequently, it is possible to execute a stable power generation which is rarely influenced by a fluctuation in a water level while holding the water turbine power generating assembly on a fixed point in the water flow. For example, in the case in which the water flow is formed in a waterway having a quay wall at both sides in a transverse direction of the flow, the water turbine power generating assembly floating support structure portion can be constituted to include a support beam having both ends supported in such a configuration that each of the quay walls in the waterway is set to be the support base, and an assembly guide body which is integrated in a suspending configuration in a middle position in a longitudinal direction with respect to the support beam and guides a vertical movement depending on a water level while regulating a movement of the hydraulic turbine power generating assembly in the direction of the water flow. By providing the assembly guide body, it is possible to smoothly guide the vertical movement of the water turbine power generating assembly. The assembly guide body can be formed to have the guide frame extended in a direction of a water depth, for example, and a sliding frame can be provided so as to be vertically slidable along the guide frame at the water turbine power generating assembly side. If one of the guide frame and the sliding frame is provided with a guide roller to be rolled in sliding contact with the other sliding surface, it is possible to guide the sliding operation along the guide frame of the water turbine power generating assembly more smoothly.

### BRIEF DESCRIPTION OF THE DRAWINGS

Fig. 1 is a schematic typical sectional view showing a first embodiment of hydroelectric power generating equipment according to the invention.
Fig. 2 is a perspective view showing a specific example of an installation of the hydroelectric power generating equipment in Fig. 1.
Fig. 3 is a perspective view showing a main part of the hydroelectric power generating equipment in Fig. 1.
Fig. 4 is a plan view showing a water turbine to be employed in the hydroelectric power generating equipment in Fig. 1.
Fig. 5 is a sectional view showing an enlarged water turbine vane to be used in the water turbine in Fig. 4.
Fag. 6 is a trihedral view showing the equipment of Fig. 3.
Fig. 7 is a sectional view showing a power generator to be employed in the hydroelectric power generating equipment in Fig. 1
Fig. 8 is a view showing an example of an arrangement of a field magnet in a first rotor of Fig. 7.
Fig. 9 is a view showing an example of an arrangement of a power generating coil in a second rotor of Fig. 7.
Fig. 10 is a typical sectional view showing a second embodiment of the hydroelectric power generating equipment according to the invention.
Fig. 11 is an explanatory view showing the details of a structure for supporting a water turbine power generating assembly into a floating configuration by using a guide frame .
Fig. 12 is an explanatory view showing an action of the hydroelectric power generating equipment in Fig. 10.
Fig. 13 is a typical view showing an example in which the hydroelectric power generating equipment in Fig. 10 is applied to a tidal power generation.
Fig. 14 is a typical view showing an example in which the hydraulic power generating equipment in Fig. 1 is applied to the tidal power generation.
Fig. 15 is a view showing a whole outer appearance according to a further example (a third embodiment) according to the invention.
Fag. 16 is a plan view of Fig. 15.
Fig. 17 is a side view of Fig. 16.
Fig. 18A is a perspective view showing an example of position holding means (a torque limiter) for controlling flip-up.
Fig. 18B is a perspective view showing the portion in more detail.
Fig. 19 is a sectional view showing a main part of Fig. 18B.
Fig. 20 is a perspective view showing a min part of Fig. 17.
Fig. 21 is a front view showing the main part of Fig. 17.
Fig. 22 is a side view of Fig. 21.
Fig. 23 is an explanatory view showing an action in Fig. 17.
Fig. 24 is a conceptual view showing a different example from Fig. 23.
Fig. 25 is a cross-sectional view including a water flow guiding member.
Fig. 26 is a longitudinal sectional view showing bearing structures of first and second water turbines.

### EMBODIMENTS OF THE INVENTION

Embodiments according to the invention will be described below with reference to the drawings.

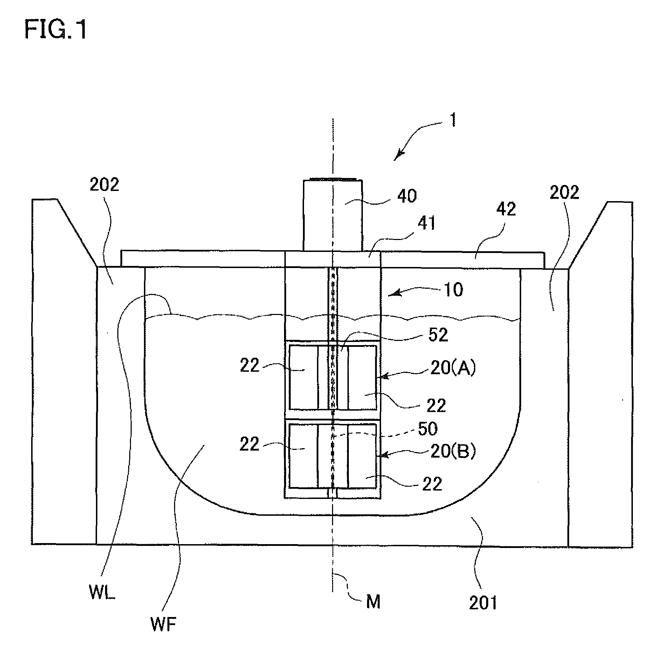

Fig. 1 shows an embodiment of hydroelectric power generating equipment according to the invention. The hydroelectric power generating equipment 1 includes water turbines 20(A) and 20(B) in which a plurality of water turbine vanes 22 is disposed integrally and rotatably around rotating shafts 50 and 52 which intersect with a water surface WL of a power generating water flow WF (although an orthogonal intersection is desirable, a strict orthogonal intersection is not essential but an inclination of approximately 10° at a maximum to a water surface normal may be permitted, for example), a power generator 40 attached to upper end sides of the rotating shafts 50 and 52 of the water turbines 20 in such a configuration that a whole body is positioned above the water surface WL and serving to convert a rotation energy of the water turbine 20 into an electric power, and water turbine supporting means 41 and 42 for supporting the water turbine 20 and the power generator 40 in such a manner that at least lower end sides of all of the water turbine vanes 22 in an axial direction of the rotating shafts 50 and 52 are immersed in the power generating water flow WF at the same time.

The water turbine supporting means is fixed to a support base 202 which cannot be moved relatively with the water flow WF, and has a power generator supporting portion 41 for supporting the power generator 40 above the water surface WL. The water turbines 20(A) and 20(B) are attached in a suspending configuration to the power generator 40 supported on the power generator supporting portion 41. In the embodiment, a water flow in an irrigation channel 201 having a quay wall 202 at both sides in a transverse direction of the flow is utilized as the power generating water flow WF. The power generator supporting portion 41 has a support beam 42 for supporting both ends in a configuration in which each quay wall 202 of the irrigation channel 201 is set to be a support base, and a power generator attaching portion 41 which is provided in a middle position in a longitudinal direction of the support beam 42 and to which the power generator 40 is to be attached.

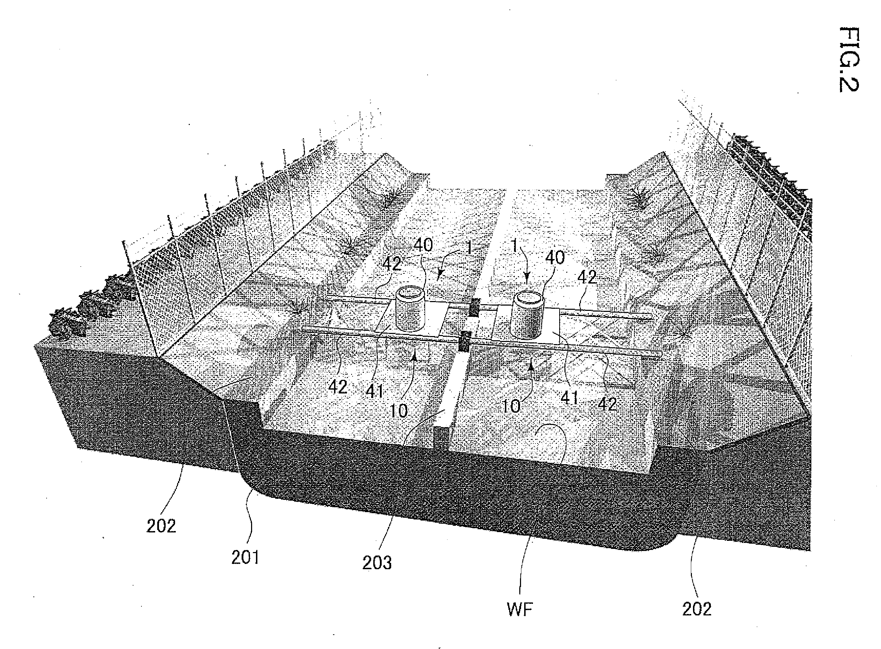

Fig. 2 shows a structure in which a plurality of hydroelectric power generating equipment 1 is arranged in parallel with a transverse direction of a flow of the irrigation channel 201. A partition wall 203 is formed in a direction of a flow of the irrigation channel 201 in a central position of the flow direction, and both ends of the support beam 42 in each of the hydroelectric power generating equipment 1 are fixed to left and right quay walls 202 and the partition wall 203, respectively.

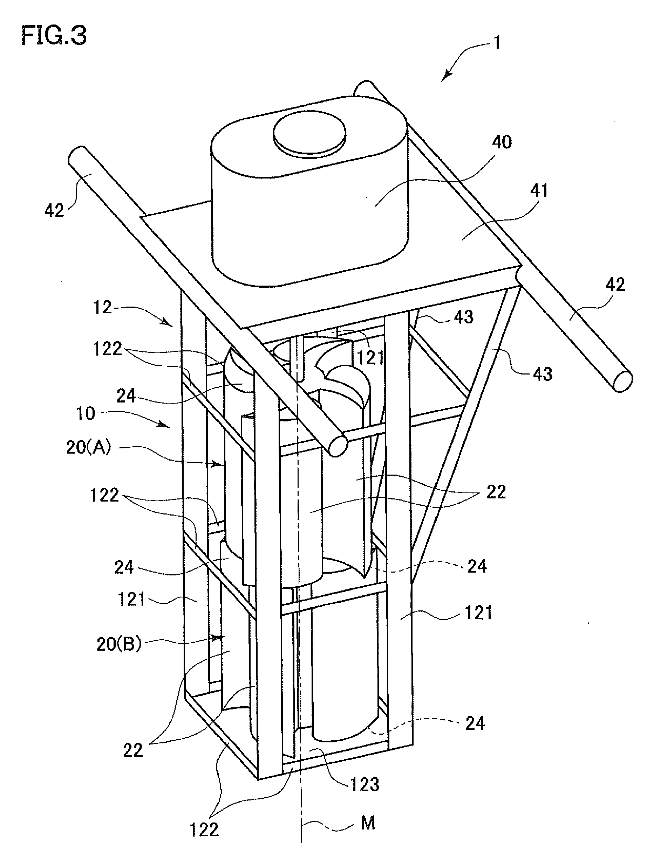

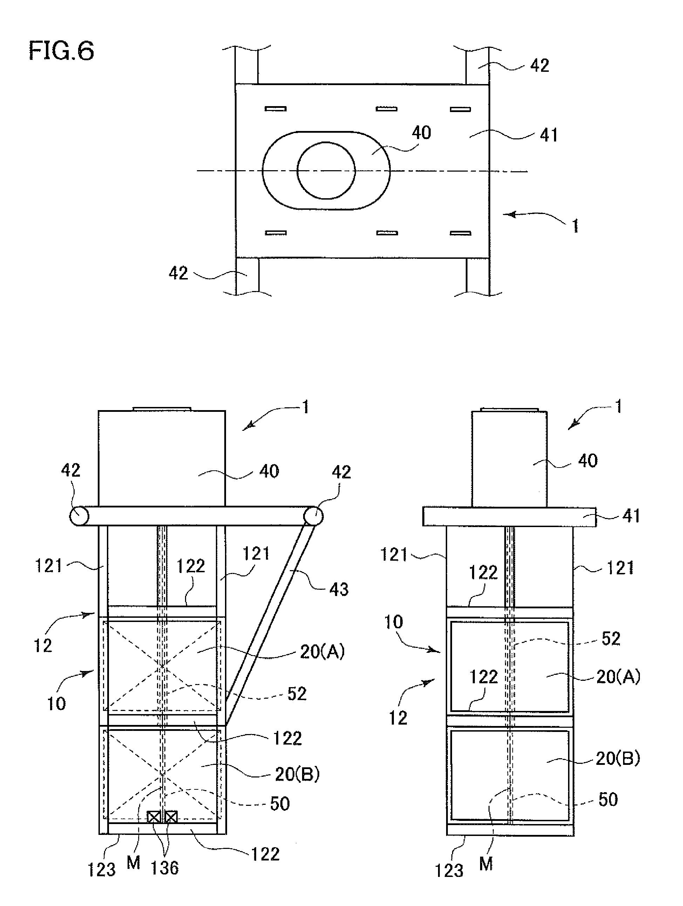

Fig. 3 is a perspective view showing a slightly enlarged outer appearance of the hydroelectric power generating equipment 1, and Fig. 6 is a trihedral view of Fig. 3. A protecting frame 10 for protecting a periphery of the water turbine 20 fixed, in the suspending configuration, to the power generator 40 attached to the power generator attaching portion 41 while permitting a passage of the water flow WF is provided below the power generator attaching portion 41. The power generator attaching portion 41 takes a square shape and a pair of support beams 42 is attached in parallel with each other along each of side surfaces forming opposite sides which are orthogonal to the water flow in the power generator attaching portion 41. The protecting frame 10 has a square bottom face portion 123, a strut portion 121 having a lower end coupled to four corners of the bottom face portion 123 and an upper end coupled to the power generator attaching portion 41 through an extension in vertical and upward directions, and a plurality of horizontal bridges 122 for coupling the respective strut portions 121 in a horizontal direction. There are provided connection-shaped reinforcing beams 43 and 43 which are extended in oblique and upward directions toward a downstream side from middle positions in a longitudinal direction of the pair of strut portions 121 and 121 placed on a downstream side in the flow direction and have upper ends coupled to downstream side edges of the power generator attaching portion 41.

In the hydroelectric power generating equipment 1, the water turbine 20 has a first water turbine 20(A) which is disposed in such a configuration that a rotating axis M is coincident with a first position on a reference axis and is rotated in a first direction upon receipt of the water flow WF, and a second water turbine 20(B) which is disposed in a second position set below the first position over the reference axis and is rotated in a reverse direction to the first water turbine 20(A) upon receipt of the water flow WF. Each of the first water turbine 20(A) and the second water turbine 20(B) has a plurality of water turbine vanes 22 for receiving water in an orthogonal orientation to the rotating axis M which is disposed around the rotating axis M, and includes four (or three) water turbine vanes 22 and two upper and lower vane support members 24. The second water turbine 20(B) has the same structure as the first water turbine 20(A) except that it takes a three-dimensional shape which is obtained by mirror-image inverting the first water turbine 20(A) with respect to a virtual vertical plane. Therefore, a main part of a structure of the water turbine will be described by taking, as a typical example, the first water turbine 20(A) side.

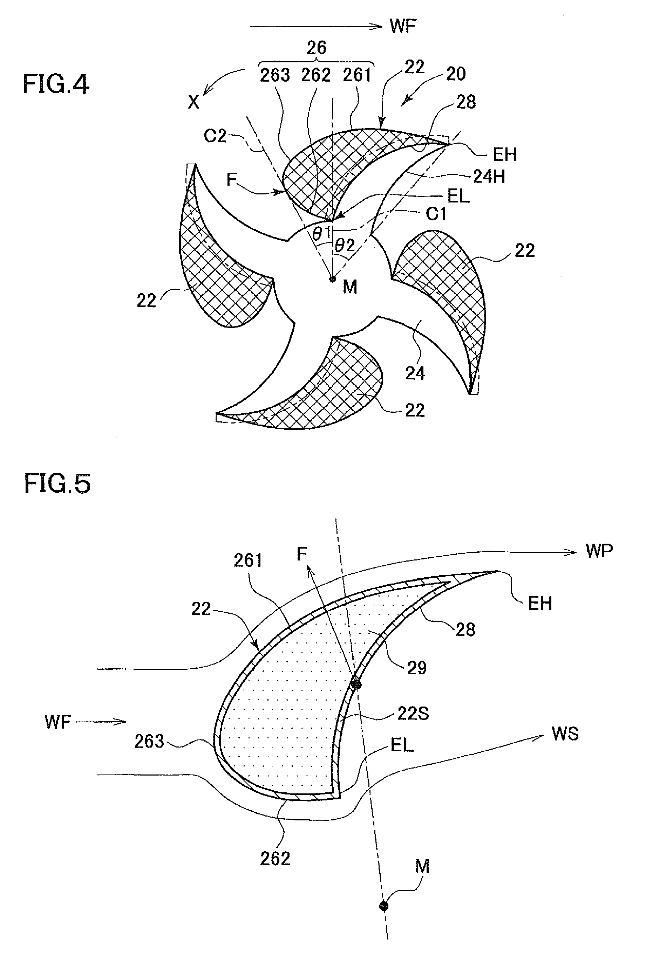

First of all, as shown in Fig. 4 (a plan view), a reference rotating direction X (which indicates an actual rotating direction of a water turbine upon receipt of a hydraulic power and is reversed mutually in the first water turbine 20(A) and the second water turbine 20(B)) is defined around the rotating axis M of each of the water turbine vanes 22. In the reference rotating direction X, a vane surface positioned on a forward side is defined to be a front vane surface 26 and a vane surface positioned on a rearward side is defined to be a rear vane surface 28, and furthermore, an edge on a close side to the rotating axis M of each of the water turbine vanes 22 is defined to be a vane inner edge EL and an edge on a distant side thereof is defined to be a vane outer edge EH. The water turbine vanes 22 are supported integrally and rotatably by means of the vane support member 24 around the rotating axis M in such a manner that the vane inner edge EL is positioned apart from the rotating axis M by a certain distance in a radial direction. In an orthogonal section to the rotating axis M, moreover, each water turbine vane 22 has the rear vane surface 28 set to be a concave curved surface which is retracted toward a forward side in the reference rotating direction X and has the front vane surface 26 set to be a convex curved surface which is protruded toward the forward side in the reference rotating direction X and has a greater curve depth than that of the rear vane surface 28.

The front vane surface 26 has a maximum curvature in a curved nose portion 263, and the curvature is decreased from the curved nose portion 263 toward the vane inner edge EL side and the vane outer edge EH side respectively, and furthermore, takes a shape of a flow line in which a length of a first surface from the curved nose portion 263 to the vane outer edge EH is greater than that of the second surface reaching the vane inner edge EL similarly. In the case in which a relative water flow is received from the forward side in the reference rotating direction X at the front vane surface 26, the first surface and the second surface function as a high speed water flow passing surface 261 and a low speed water flow passing surface 262 respectively in such a manner that a speed of a relative water flow WP generated along the first surface from the curved nose portion 263 toward the vane outer edge EH is higher than that of a relative water flow WS generated along the second surface toward the vane inner edge EL similarly.

As shown in Fig. 5, a lift torque based on a difference in a flow speed of a relative water flow between the high speed water flow passing surface 261 and the low speed water flow passing surface 262 is generated in such an orientation as to rotate the water turbine vane 22 in the reference rotating direction X at the rear vane surface 28 side. In other words, in the case in which the water flow WF is received in a configuration of head water as seen from the front vane surface 26 side, it is possible to generate such a torque as to rotate the water turbine 20 against the water flow WF by a lifting force based on the difference in the flow speed of the relative water flow between the high speed water flow passing surface 261 and the low speed water flow passing surface 262. On the other hand, the water turbine vane 22 on an opposite side by 180° with respect to the axis M receives the water flow WF from the rear vane surface 28 side. Since the rear vane surface 28 is formed to take a shape of a concave surface, however, it can efficiently receive the water flow WF and can convert the water flow WF into a running torque. In other words, the water turbine 20 constituted by the water turbine vane 22 taking the shape described above generates the torque for rotating the water turbine 20 by setting the front vane surface 26 side as a rotating forward side even if the water turbine vane 22 is present on any side with respect to the rotating axis M. Therefore, any of the water turbine vanes 22 in the power generating water flow WF also contributes effectively to the generation of the running torque. As a result, an efficiency for converting the water flow WF into the rotating force of the water turbine 20, and furthermore, a power generating force can be enhanced dramatically and a starting property of the water turbine 20 at a low flow speed can also be enhanced considerably.

The water turbine vane 22 has a section seen in a vertical direction which takes the same shape in any horizontal sectional position. Both of the front vane surface 26 and the rear vane surface 28 are formed by a vane plate constituted by a metal plate processed to take a curved shape, for example, a stainless steel plate, and take hollow shapes. Moreover, an inner part thereof is filled with a resin filling material 29 such as an urethane foam or a polystyrene foam. On the other hand, upper and lower end faces of the water turbine vane 22 are constituted by a cover plate 27 formed by a metal plate (for example, a stainless steel plate) in the same manner, and have peripheral edges welded and coupled to a side edge of the metal plate forming the front vane surface 26 or the rear vane surface 28 to seal and close the internal space filled with the resin filling material. An apparent density (a specific gravity) of the whole water turbine vane 22 thus constituted is lower than that of water (for example, 0.2 to 0.9 g/cm3).

Returning to Fig. 4, a mean curvature of the high speed water flow passing surface 261 is set to be higher than that of the low speed water flow passing surface 262, and a water receiving sectional area of the high speed water flow passing surface 261 is larger than that of the low speed water flow passing surface 262. In an orthogonal section to the rotating axis M, moreover, a straight line connecting the rotating axis M and the vane inner edge EL is set to be a first line C1, and a first angle θ1 formed by a second line C2 circumscribed with the front vane surface 26 via the rotating axis M and the first line C1 is set to be smaller than a second angle θ2 formed by a third line C3 passing through the vane outer edge EH via the rotating axis M and the first line C1. In the orthogonal section to the rotating axis M, referring to each water turbine vane 22, a mean curvature of the rear vane surface 28 is set to be lower than that of the front vane surface 26 and a water flow passing through the low speed water flow passing surface 262 forms an eddy current at the rear vane surface 28 side with difficulty. In the water turbine vane 22, moreover, the vane inner edge EL and the vane outer edge EH are formed as ridge line portions constituting an intersection line of the front vane surface 26 and the rear vane surface 28 in each curving configuration. Furthermore, the vane support member 24 is coupled to each water turbine vane 22 at an end face in the direction of the rotating axis M with fastening means such as a screw or a rivet which is not shown, and they are integrated as the water turbine 20.

As shown in Fig. 6, a first rotating shaft 52 forming a rotating shaft of the first water turbine 20(A) is formed cylindrically and has a lower end coupled to (the vane support member 24 of) the first water turbine 20(A) and an upper end coupled to the power generator 40. Moreover, a second rotating shaft 50 forming a rotating axis of the second water turbine 20(B) has a lower end coupled to (the vane support member 24 of) the second water turbine 20(B), while an upper end side coaxially penetrates through an inner part of the cylindrical first rotating shaft 52 and an upper end is then coupled to the power generator 40. The power generator 40 is fixed to an upper surface of the plate-shaped power generator attaching portion 41, and the first rotating shaft 52 and the second rotating shaft 50 penetrate through the power generator attaching portion 41 and are thus coupled to the water turbines 20(A) and 20(B), respectively.

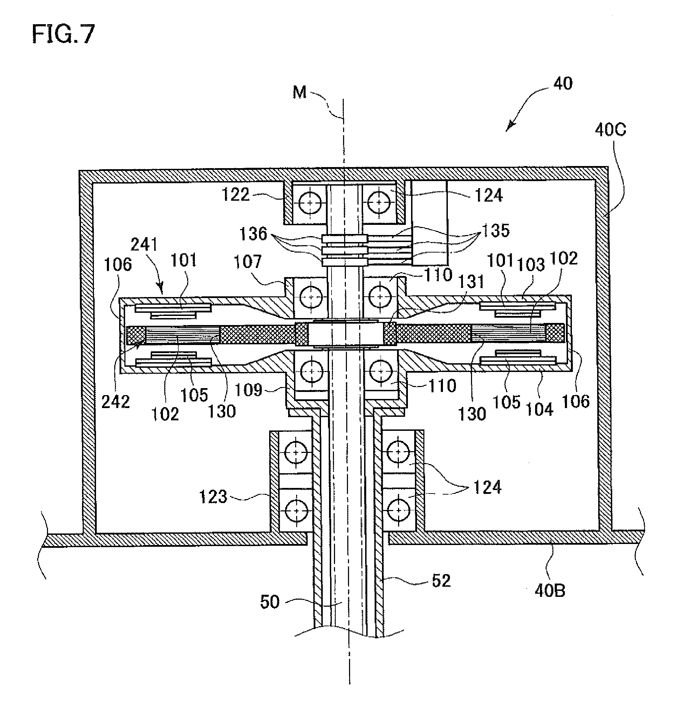

Fig. 7 shows an inner part of the power generator 40 which is enlarged, and includes a first rotor 241 provided with a field magnet 101, and a second rotor 242 provided with a power generating coil 102 which is to be rotated integrally with a second rotation inputting portion 30 in a reverse direction to the first rotor 241 and is to be excited by the field magnet 101. In order to oppose the power generating coil 102 and the field magnet 101 to each other in the direction of the rotating axis M in such a shape as to form an air gap, there is constituted an axial gap type power generator 40 in which the power generating coils 102 formed to be coreless and flat are arranged in such a configuration that each axial direction around the rotating axis M is coincident with the direction of the rotating axis M in the second rotor 242 and the field magnets 101 are arranged around the rotating axis M in a magnetization configuration in the direction of the rotating axis M in the first rotor 241. The first rotating shaft 52 of the first water turbine 20(A) and the second rotating shaft 50 of the second water turbine 20(B) are connected to the first rotor 241 and the second rotor 242, respectively.

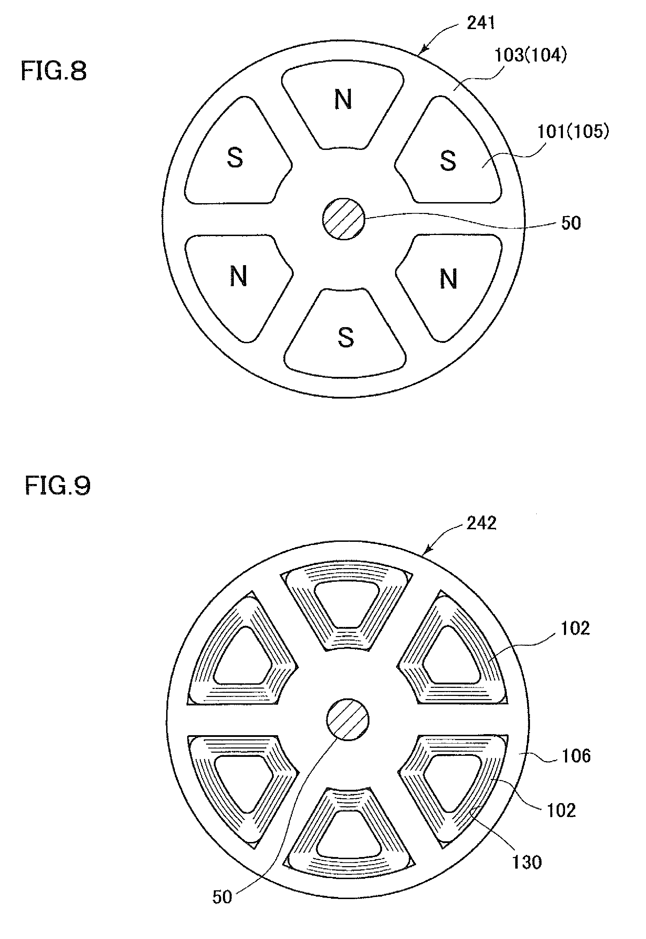

The first rotor 241 has a disk-shaped rotor body 103 in which the field magnet 101 is to be attached to an opposed surface to the power generating coil 102 of the second rotor 242, and the first rotating shaft 50 formed separately from the second rotating shaft 52 is coupled to the rotor body 103 through bonding so as to be integrally rotatable. The field magnet 101 is constituted by a flat permanent magnet which is magnetized in a vertical direction, more specifically, a rare earth (Nd, Dy, Pr) - Fe - B based magnet, and magnetizing polarities of the adjacent magnets in a rotating circumferential direction are inverted alternately as shown in Fig. 8. As shown in Fig. 9, moreover, the second rotor 242 has a coil support frame 106 to which the second rotating shaft 52 is fixed to be integrally rotatable, and the coreless and flat power generating coil 102 is assembled into a plurality of coil attaching windows 130 formed in a circumferential direction of the coil support frame 106 in such a manner that a coil axial direction (a cavity opening direction) is turned toward an axial direction and winding directions of adjacent coils are reverse to each other.

Returning to Fig. 7, the first rotor 241 has a disk-shaped auxiliary rotor body 104 in an opposed configuration to the rotor body 103 from an opposite side in the axial direction with respect to the power generating coil 102 of the second rotor 242. A plurality of auxiliary field magnets 105 magnetized in a reverse direction to the field magnet 101 is attached to corresponding positions to the field magnet 101 on the rotor body 103 side in an opposed surface of the auxiliary rotor body 104 to the power generating coil 102 (An attaching configuration is the same as that of the field magnet 102 shown in Fig. 8. If a magnetized surface of the field magnet 102 which faces the power generating coil 102 is N (S), however, a magnetized surface of the auxiliary field magnet 105 which corresponds thereto is S (N)).

The power generator 40 includes a case (having a case body 40C and a case bottom portion 40B) for accommodating the first rotor 241 and the second rotor 242. A cylindrical auxiliary bearing sleeve 122 is protruded in such a configuration as to surround the rotating axis M from a lower surface in a top part of the case body 40C, and an auxiliary bearing 124 is disposed on an inside thereof. On the other hand, a cylindrical auxiliary bearing sleeve 123 is protruded in such a configuration as to surround the rotating axis M from an upper surface of the case bottom portion 40B, and an auxiliary bearing 124 is disposed on an inside thereof.

The rotor body 103 and the auxiliary rotor body 104 are coupled to each other so as to be integrally rotatable through a peripheral wall portion 106 surrounding the second rotor 242 in a circumferential direction at an outer peripheral edge. The rotor body 103, the peripheral wall portion 106 and the auxiliary rotor body 104 constitute a field yoke formed by a soft magnetic metal material (in the embodiment, a permalloy). A cylindrical first bearing sleeve 107 is protruded upward in such a configuration as to surround the rotating axis M in a main surface of the rotor body 103 on an opposite side to a side where the rotor body 103 faces the second rotor 242. Moreover, a cylindrical second bearing sleeve 109 is protruded downward from a main surface at an opposite side to a side where the auxiliary rotor body 104 faces the second rotor 242.

The second rotating shaft 52 penetrates through the second bearing sleeve 109, the second rotor 242 and the first bearing sleeve 107 and a tip portion thereof enters the auxiliary bearing sleeve 122, and the second rotating shaft 52 is supported rotatably by the auxiliary bearing 124. A main bearing 110 for causing the first rotor 241 to support the second rotor 242 in such a shape as to permit their relative rotating and sliding motions is disposed between the first bearing sleeve 107 and second bearing sleeve 109 and the second rotating shaft 52 at both sides of the second rotor 242 in the axial direction. The first rotor 241 takes such a configuration as to enclose the second rotor 242, and furthermore, the field magnet 101 and the power generating coil 102 which constitute main parts of the power generator 40 through the field yoke portion, the first bearing sleeve 107 and the second bearing sleeve 109, and a rotating and sliding portion is sealed with the main bearing 110. Therefore, water drops, foreign substances or the like are prevented from entering the main parts of the power generator 40 from an outside.

A slip ring 136 to be linked to each of the power generating coils 102 is provided on a surface of the second rotating shaft 50 between the second bearing sleeve 109 and the auxiliary bearing sleeve 122, and a power generation output is taken out of the power generating coil 102 through a brush 135 sliding over the slip ring 136 on the first rotating shaft 50. On the other hand, a portion of the second rotating shaft 52 which is positioned below the second bearing sleeve 109 is supported by the auxiliary bearing 124, and at the same time, is extended downward in a penetrating configuration.

Next, description will be given to an operation of the hydroelectric power generating equipment 1 according to the embodiment.
As shown in Fig. 1, the first water turbine 20(A) and the second water turbine 20(B) are disposed in the power generating water flow WF in the irrigation channel 201 together with the protecting frame 10. At this time, the positions in which the first water turbine 20(A) and the second water turbine 20(B) are to be installed in a water depth direction are aligned in such a manner that the water turbines 20(A) and 20(B) are wholly positioned under the mean water level WL of the irrigation channel 201. As described above, the first water turbine 20(A) and the second water turbine 20(B) which are constituted by the water turbine vane 22 are wholly immersed, and furthermore, generate a torque for rotating the water turbine 20 with the front vane surface 26 side set to be a rotating forward side irrespective of a side where the water turbine vane 22 is present with respect to the rotating axis M in the water flow. Therefore, it is possible to considerably increase an efficiency for converting the water flow WF into a rotating force of the water turbine 20, that is, a power generating force, and to also enhance a starting property of the water turbine 20 at a low flow speed remarkably.

Moreover, both of the water turbines 20(A) and 20(B) take a using configuration in which all of the water turbine vanes 22 are immersed at the same time. As a result, an immersed volume of the whole water turbine 20 is remarkably increased, and a weight of the water turbine 20 itself and a considerable part of a weight of the power generator 40 to be connected to the water turbine 20 can be accepted by a sum of a buoyancy acting on each of the water turbine vanes 22. Consequently, it is possible to reduce the weight of the support structure portions of the water turbine 20 and the power generator 40 and to carry out space saving. Thus, it is possible to effectively cut down a space and a construction cost in the installation of the hydroelectric power generating equipment 1.

More specifically, there is employed the structure in which both ends of the support beam 42 are supported with the quay wall 202 of the irrigation channel 201 set to be a support base, and the power generator 40 is attached to the power generator attaching portion 41 provided in a middle position in a longitudinal direction thereof, and furthermore, the water turbine 20 is attached to the power generator 40 supported on the power generator supporting portion 41 in a suspending configuration at the upper ends of the rotating shafts 50 and 52. Weights of the power generator 40 and the water turbines 20(A) and 20(B) are added as a flexure load to the support beam 42. Since the water turbines 20(A) and 20(B) are immersed into the water to receive a buoyancy, however, a considerable part of the load acting on the support beam 42 can be offset. As a result, the support beam 42 can sufficiently support the power generator 40 and the water turbines 20(A) and 20(B) even if it has a low bending rigidity, and a weight thereof can be reduced. Moreover, the water turbine vane 22 is formed as a structure having an apparent specific gravity which is smaller than that of water through the configuration shown in Fig. 5. Therefore, it is possible to further reduce the weight of the whole power generating equipment.

Moreover, the upper and lower water turbines 20(A) and 20(B) are rotated in reverse directions to each other upon receipt of the water flow. Therefore, the first rotor 241 and the second rotor 242 in the power generator 40 are rotated in reverse directions to each other corresponding to a flow speed in Fig. 7, and a double relative rotating speed between the rotors can be obtained as compared with the case in which one of them is fixed. Consequently, a power generation efficiency can be enhanced. As described above, in the power generator 40, the field magnet 101 and the power generating coil 102 are opposed to each other in the axial direction. Therefore, the respective weights of the field magnet 101 and the power generating coil 102 concentrate on almost the same radial positions of the first rotor 241 provided with the field magnet 101 and the second rotor 242 provided with the power generating coil 102 so that a difference is made in a moment of inertia around the rotating axis M with difficulty. As a result, rotational inertia forces of the upper and lower water turbines are imbalanced with difficulty so that a power generating characteristic in a low speed rotation can easily be stabilized. Moreover, a cancel effect for a torsional rotation applied load to the rotating shafts 50 and 52 can also be enhanced considerably and can also act advantageously in respect of a structural strength. Furthermore, both the power generating coil 102 and the field magnet 101 can be constituted to be thin, and the power generating coil 102 is of an air core type, which greatly contributes to a reduction in a weight of the whole hydroelectric power generating equipment 1. The loads of the power generating coil 102 and the field magnet 101 comparatively concentrate in the axial direction. Therefore, a flywheel effect can be enhanced considerably. As a result, a fluctuation in the rotating shaft in strong water can also be suppressed effectively. Since repulsive field forces of the coil and the magnet are generated in the axial direction, the fluctuation in the rotating shaft or cogging occurs with difficulty. Furthermore, the power generating coil 102 is of the air core type. Therefore, an eddy current loss is small and a power generating efficiency is also excellent. Moreover, the heat generation of the power generator 40 is also suppressed.

Moreover, the first rotating shaft 52 linked to the upper water turbine 20(A) is made hollow and the second rotating shaft 50 linked to the lower water turbine 20(B) are provided in a coaxial penetrating configuration through the inside of the first rotating shaft 52. Consequently, the two water turbines 20(A) and 20(B) to be rotated in the reverse directions to each other are directly connected to the rotors 41 and 42 in the power generator 40. Thus, two-way rotary type power generating equipment is implemented by a very simple mechanism. Moreover, gravities acting on the water turbines 20(A) and 20(B) act on the power generator 40 coaxially and downward. Therefore, there is obtained a structure in which the fluctuation in the rotating shaft or the like occurs with more difficulty together with a restoring force in a rotation carried out upon receipt of a water flow and a durability is excellent.

The hydroelectric power generating equipment according to the invention can be designed in such a manner that each of the water turbine vanes 22 is constituted by a metal shell 22S and the porous resin filling material 29 as shown in Fig. 5, and an apparent specific gravity is set to be smaller than that of water, and a buoyancy which might be generated when the whole water turbines 20(A) and 20(B) are immersed is thus set to be more than the weight of the whole power generating equipment. In this case, the whole power generating equipment can be constituted as float type power generating equipment which is wholly floated in the water.

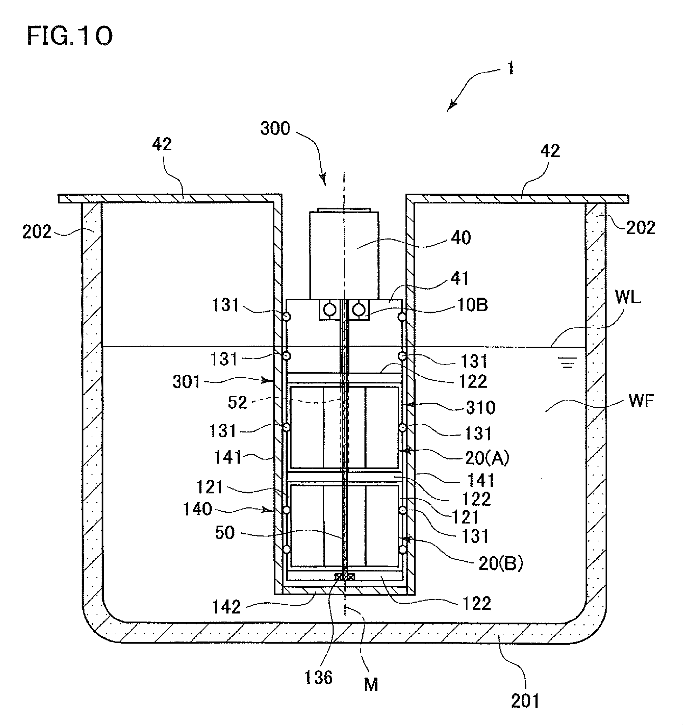

Fig. 10 shows a specific example of the structure (common elements to the hydroelectric power generating equipment in Fig. 6 have the same reference numerals). With the structure of the hydroelectric power generating equipment 1, the power generator 40 and the water turbines 20(A) and 20(B) form an integral water turbine power generating assembly 300 which is floated and held in the water. More specifically, each of the water turbine vanes 22 serves as a buoyancy applying portion for applying a buoyancy in such a manner that both of the water turbines 20(A) and 20(B) are immersed under the water surface WL and a whole body of the power generator 40 is positioned above the water surface WL. A lower end of the lower second water turbine 20(B) does not come in contact with a water bottom but holds a floating state. Moreover, it is advantageous that the two water turbines are provided in upper and lower parts in respect of an increase in the number of the water turbine vanes 22 serving as a buoyancy source and the floating hold of the whole power generating equipment.

A water turbine power generating assembly 300 has a power generator attaching portion 41 having an upper surface side to which a power generator 40 is to be attached, and the power generator 40 is attached to the upper surface, and furthermore, water turbines 20(A) and 20(B) are suspended therebelow. A protecting frame 10 is provided to protect the periphery of the water turbines 20(A) and 20(B) while permitting a passage of a water flow WF. Moreover, a bearing 136 is provided in a bottom part of the protecting frame 10. The bearing 136 serves to rotatably support a lower end of a second rotating shaft 50 in the second water turbine 20(B). The power generator attaching portion 41 is formed to be hollow by means of a metal plate or the like (or a structure in which an inner part thereof is filled with a porous resin filling material or the like) so that it is possible to reduce an apparent specific gravity (for example, to reduce the apparent specific gravity to be smaller than that of water). Consequently, a contribution from the power generator attaching portion 41 can also be utilized effectively as a buoyancy for floating the water turbine power generating assembly 300.

With the structure shown in Fig. 10, moreover, a assembly support portion 301 for supporting the water turbine power generating assembly 300 is provided to regulate a position in a flow direction in the water flow WF and to regulate a movement in the direction of the water flow WF, and to permit a vertical movement depending on a water level. More specifically, the assembly support portion 301 includes a support beam 42 having both ends supported in such a configuration that each quay wall 202 of an irrigation channel 201 is set to be a support base, and an assembly guide member 140 which is integrated in a suspending configuration in a middle position in a longitudinal direction with respect to the support beam 42 and guides a vertical motion depending on the water level while regulating the movement of the water turbine power generating assembly 300 in the direction of the water flow WF.

An assembly guide member is constituted as the guide frame 140 extended in a direction of a water depth. The guide frame 140 has a square bottom face portion 142 and strut portion 141 having lower ends coupled to four corners of the bottom face portion 142 and extended vertically and upward respectively and having upper ends coupled to the support beam 42 (a plurality of horizontal bridges for coupling the respective strut portions 141 in a horizontal direction may be provided). On the other hand, a sliding frame 310 is provided to be vertically slidable along the guide frame 140 at the water turbine power generating assembly 300 side. The sliding frame 310 includes a square bottom face portion 123, strut portions 121 having lower ends coupled to four corners of the bottom face portion 123 and extended vertically and upward respectively and having upper ends coupled to the power generator attaching portion 41, and a plurality of horizontal bridges 122 for coupling the respective strut portions 121 in a horizontal direction, and is inserted to be vertically slidable at an inside of the guide frame 140. A plurality of guide rollers 131 is attached to each of the strut portions 121 of the sliding frame 310 at a predetermined interval in a vertical direction by setting, as a sliding surface, an internal surface of the corresponding strut portion 141 at the guide frame 140 side. The guide roller 131 rolls with the vertical motion of the sliding frame 310.

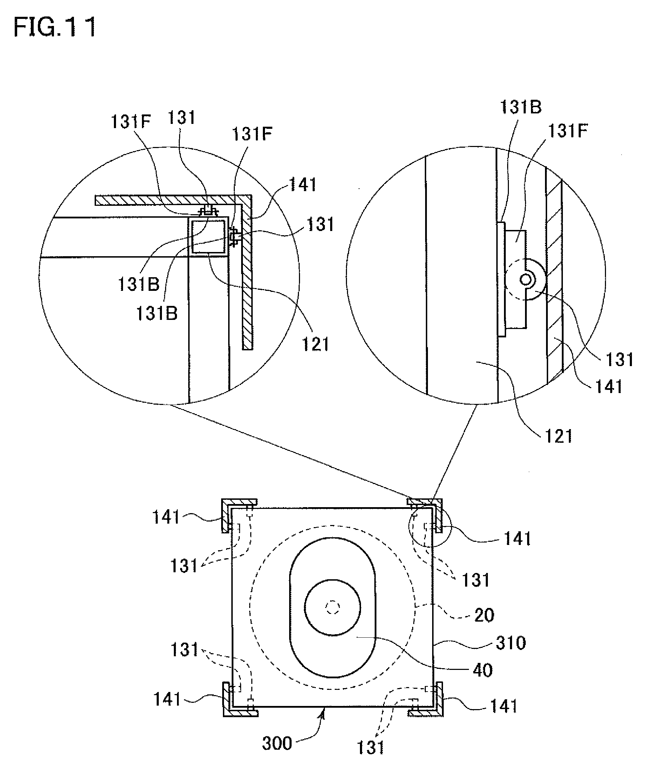

As shown in Fig. 11, the strut portion 141 of the guide frame 140 is formed as a prism (an L shape may be taken). On the other hand, the strut portion 141 of the sliding frame 310 is formed to have an L-shaped section which is opposed to the corner portion of the guide frame 140 having a square section. A frame-shaped roller supporting portion 131F is fastened and fixed to each side surface of the strut portion 141 at an attaching base 131B formed integrally with a base end thereof through a bolt which is not shown or the like. The guide roller 131 is rotatably supported on the roller supporting portion F.

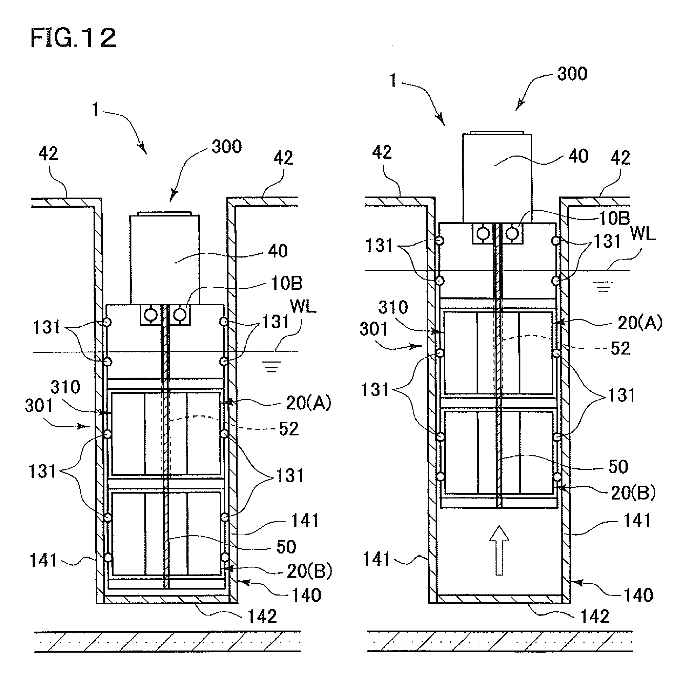

As shown in Fig. 12, with the structure, the water turbine power generating assembly 300 is supported in a floating form above the water surface WL. In the case in which the water surface WL of the power generating water flow WF fluctuates vertically, therefore, the position of the whole water turbine power generating assembly 300 is varied vertically corresponding to the water level. As a result, the water turbines 20(A) and 20(B) always maintain an immersed state with an immersion depth from the water surface WL held to be constant. As a result, also in the case in which the water level is lowered, there is rarely caused a disadvantage that the first water turbine 20(A) in the upper side is exposed upward from the water surface and a quantity of water to be received is insufficient, resulting in a reduction in a power generation efficiency. Moreover, the immersion depth of each of the water turbines 20(A) and 20(B) is constant. Therefore, a hydrostatic pressure acting on each of the water turbine vanes 22 is also constant. For example, also in the case in which the water level is extremely increased, there is no fear that an excessive hydrostatic pressure might be applied to the water turbine vane 22.

Furthermore, the water turbine power generating assembly 300 is mechanically and perfectly separated from the assembly support portion 301, and a weight load of the water turbine power generating assembly 300 is not applied to the assembly support portion 301 at all. Therefore, it is possible to considerably reduce the weight of the support beam 42 of the assembly support portion 301.

The water turbine power generating assembly 300 is vertically moved in the guide frame 140 fixed with respect to the water flow WF through the sliding frame 310. Therefore, there is not caused a disadvantage that the water turbine power generating assembly 300 flows in the water flow WF, resulting in a decrease in a relative flow speed of the water flow WF with respect to the water turbines 20(A) and 20(B).

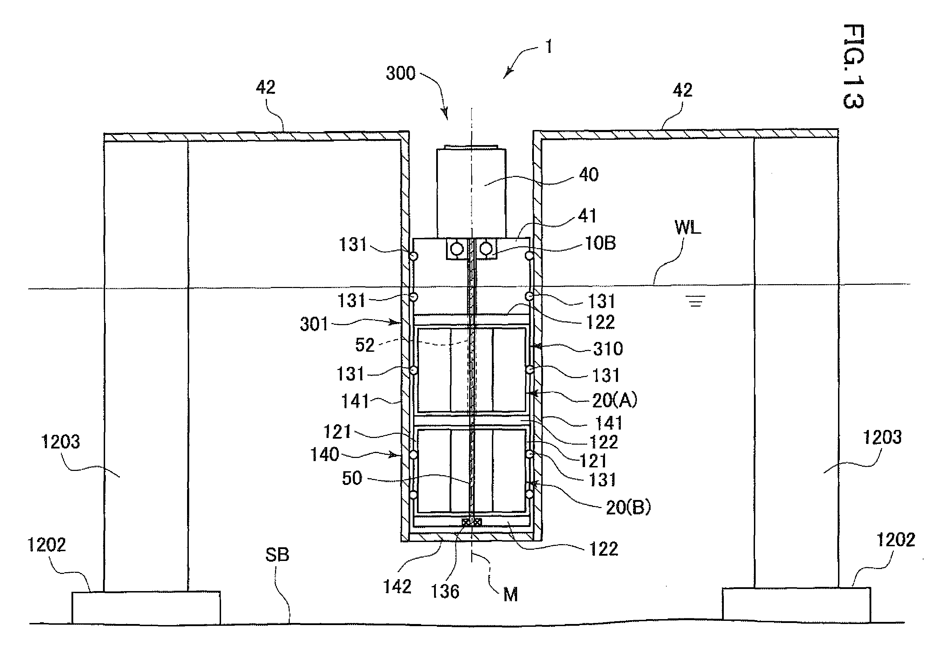

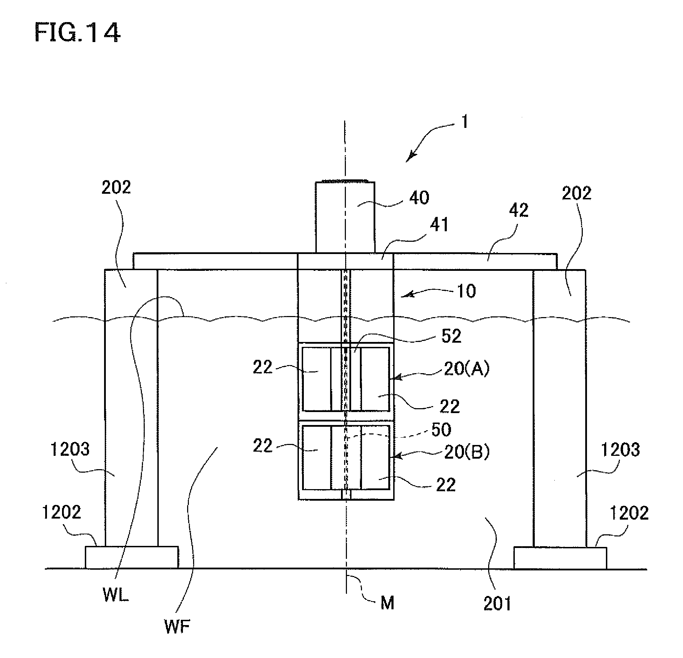

Although the embodiment of the hydroelectric power generating equipment according to the invention has been described by taking, as an example, the case in which the equipment is disposed in the irrigation channel, an installation target of the equipment is not restricted to the irrigation channel but a river may be employed. If the equipment is installed in the sea, it can also be utilized in a so-called tidal power generation in which a tidal current is used as a power generating water flow. In this case, as shown in Fig. 13, support bases 1202 and 1202 are installed on the bottom of the sea, and it is sufficient that struts 1203 and 1203 are erected on the support bases 1202 and 1202 and the support beam 42 in Fig. 3 or Fig. 10 is provided on the struts 1203 and 1203 (the structure can also be employed in the case in which the hydroelectric power generating equipment according to the invention is installed in a river having a great width in which the support beam is hard to be provided in one span). Fig. 13 shows the embodiment in which the guide frame 140 is suspended onto the support beam 42 and the water turbine power generating assembly 300 is floated in the water and is supported in the guide frame 140 in the same manner as in Fig. 12. As shown in Fig. 14, however, it is a matter of course to employ a structure in which the support beam 42 is caused to support a motor supporting portion 41 in the same manner as in Fig. 1.

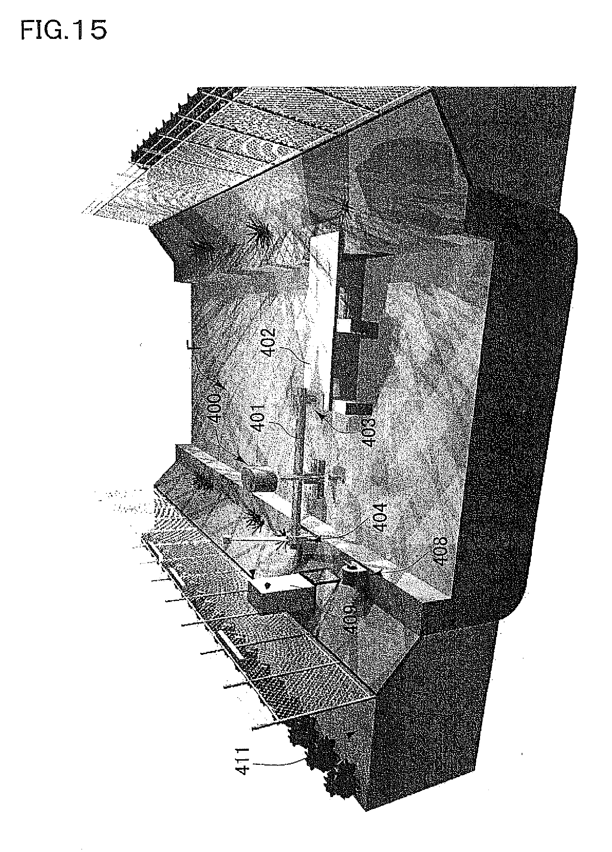

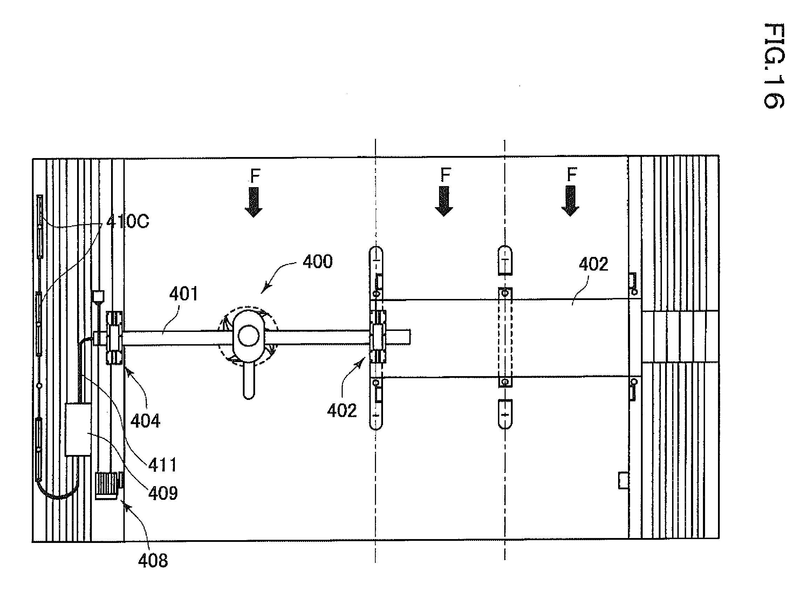

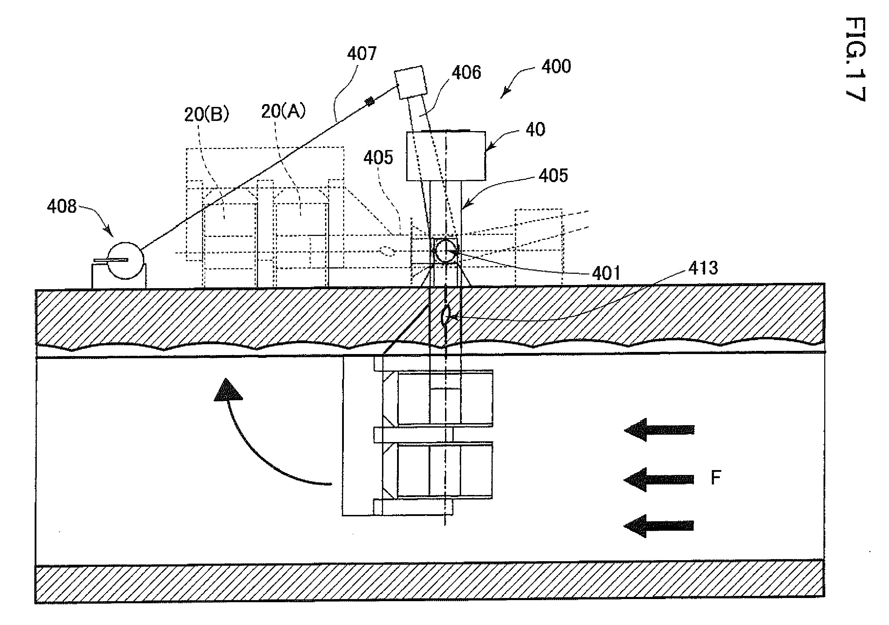

A further example will be described. The same portions as those in the examples shown in Figs. 1 to 14 have the same reference numerals and description thereof will not be repeated here. A hydroelectric power generating equipment 400 according to the example can carry out a flip-up rotation with a fixedly positioned shaft 401 (usually, a horizontal shaft) set to be a fulcrum point (a rotation of approximately 90° in an almost vertical plane) as shown in Fig. 17. As shown in Figs. 15 and 16, the shaft 401 is disposed almost horizontally in order to be almost orthogonal to a flow (water flow) F of a river, and has one of ends supported on a managing bridge 402 extended in a transverse direction of a river or a waterway through a bearing 403 and has the other end supported on an upper surface of a river bank or a waterway wall in the river or the waterway through a bearing 404. As shown in Fig. 17, the shaft 401 and a frame 405 constituting water turbine supporting means together with the shaft 401 are coupled integrally with each other, and furthermore, an arm 406 extended in a radial direction is fixed to the shaft 401 and is connected to a winch 408 disposed on the upper surface of the river bank or the waterway wall through a wire 407.

As shown in Figs. 15 and 16, a power generated in the hydroelectric power generating equipment 400 is supplied to a street light 410 through an electrical control panel 409 and can be utilized as a night illumination of a street 411. In order to constitute such a conduction path, a distribution cable 411 is provided. As shown in Fig. 17, two water turbines 20 (that is, a first water turbine 20(A) and a second water turbine 20(B) which are rotated in reverse directions to each other with respect to a water flow in a certain direction are provided on a lower side and a power generator 40 is provided on an opposite side (an upper side) with the shaft 401 for rotatably supporting the frame 405 interposed therebetween. The power generator 40 functions as a kind of weight in a flip-up method.

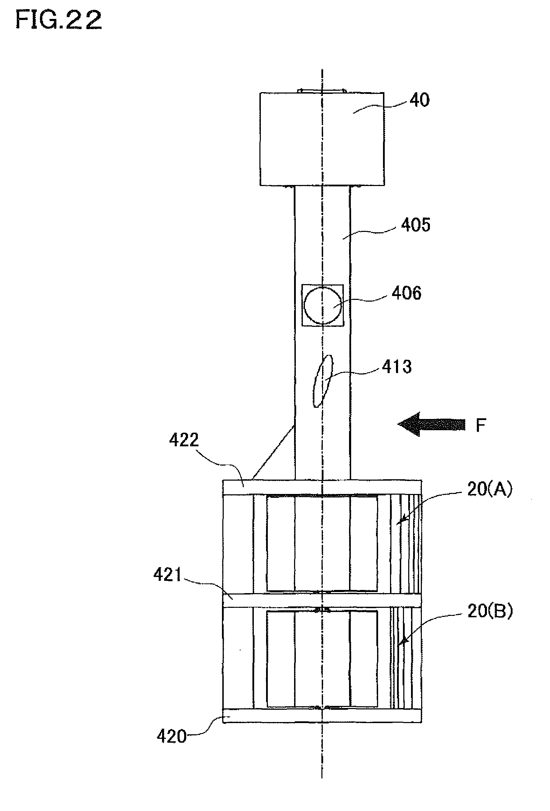

Each of the water turbines 20 has an apparent specific gravity which is smaller than that of water, and a moment of rotation in a clockwise direction in Fig. 17 is generated in the frame 405 by a buoyancy and a power of a water flow which is generated when the water turbine 20 is immersed, and furthermore, the power generator provided in an upper part functions as the weight. When the frame 405 is rotated at a certain angle in the clockwise direction, therefore, the moment of rotation in the clockwise direction is generated. A water level flip-up sensor plate 413 is fixed to the frame 405 in a position placed in no contact with a water flow on an ordinary water level at a lower side of the shaft 401. The plate 413 is inclined downward in such a manner that a lower side precedes an upper side with respect to the water flow F as shown in Fig. 22 and serves to generate the moment of rotation in the clockwise direction of the drawing with respect to the frame 405 between the two water turbines 20 and the shaft 401 upon receipt of the water flow F on such a high water level that the plate 413 is immersed.

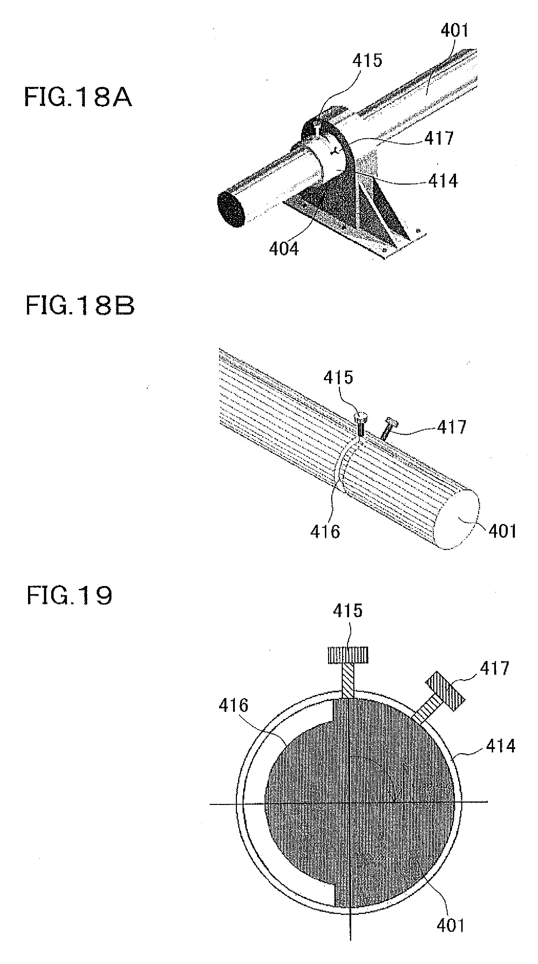

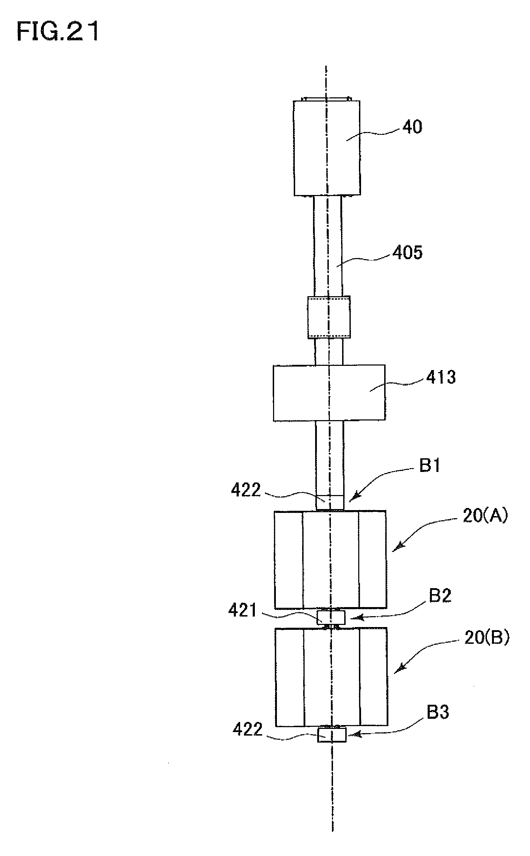

As shown in Fig. 21, moreover, the plate 413 is extended in a predetermined width symmetrically with respect to a center line of the frame 405. The hydroelectric power generating equipment 400 is usually held by holding means in an almost vertical position (a power generating position) shown in Fig. 17 . For example, as shown in Fig. 18A, a bearing 403 supporting one of ends of the shaft 401 integrally includes a sleeve portion 414 in which the shaft 401 is to be fitted rotatably, a load regulating valve (a load regulating bolt) 415 is provided as a torque limiter on the sleeve portion 414, and the bolt 415 serving as holding means is fastened into an outer peripheral surface of the shaft 401 through a screw hole formed on the sleeve portion 414. Consequently, a rotating position of the shaft 401 is held in a corresponding phase to a vertical position of the hydroelectric power generating equipment 400 shown in Fig. 17 by frictional forces of the bolt 415 and the shaft 401.

As shown in Figs. 18 and 19, a key groove 416 (a relief groove) is formed on the shaft 401 in a circumferential direction thereof . When the shaft 401 is rotated by a very small angle upon receipt of a running torque in a clockwise direction of the drawing, the bolt 415 has a positional relationship corresponding to the key groove 416 so that a holding force of the bolt 415 with respect to the shaft 401 disappears. In Fig. 17, the frame 405 generates a moment of rotation in the clockwise direction of Fig. 17 by the buoyancy of the two water turbines 20 and the force of a water flow, and the action of the weight through the power generator 40 in the upper part so that it is flipped upward. In this case, the winch 408 winds the wire 407 back to permit the flip-up. In this state, it is possible to carry out the maintenance of each of the water turbines 20 or the power generator 40, or the like. Moreover, the hydroelectric power generating equipment 400 is prevented from being damaged in a strong current or the like. Also in the case in which a foreign substance sticks to the two water turbines 20 so that a resistance to the water flow is increased, alternatively, the hydroelectric power generating apparatus 400 is flipped up to prevent the damage. Furthermore, the resistance of both of the water turbines 20 to the water flow is eliminated by the flip-up. Therefore, it is also possible to generate an effect for preventing the water flow from being disturbed.

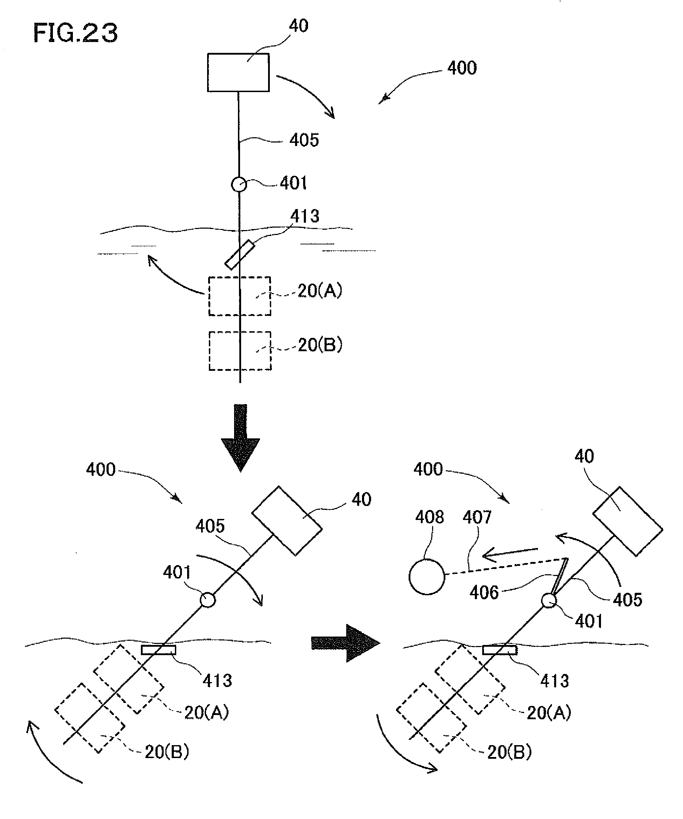

When the water flow acts on the plate 413 in a state in which the water level is raised in a heavy rain, a flood or the like so that the water level flip-up sensor plate 413 is immersed (see Fig. 23), moreover, a moment of rotation in the clockwise direction is generated in the frame 405 in Fig. 17. Therefore, a further great moment of rotation in a flip-up direction is generated together with the buoyancy of both of the water turbines 20, the force of the water flow and the action of the power generator 40 (weight). Consequently, it is also possible to achieve the prevention of the damage through the flip-up of the hydroelectric power generating equipment 400 in a high flow. For example, in the case in which the hydroelectric power generating equipment 400 in the flip-up state is constituted to be moved (slid) along the shaft 401 in an axial direction thereof in Fig. 16 or the like, it is possible to draw the hydroelectric power generating equipment 400 to the bank side (the bearing 404 side), thereby carrying out a maintenance or a necessary processing.

In order to return the hydroelectric power generating equipment 400 in the flip-up state to a power generating position in a vertical condition in Fig. 17, it is sufficient to wind the wire 407 up by means of the winch 408, to rotate the frame 405 in a counterclockwise direction of the drawing through the arm 406, to place both of the water turbines 20 in a power generating position in which they are immersed to face each other with respect to the water flow and to fasten the load regulating valve (bolt) 415 in Fig. 19 or the like in a predetermined load in order to hold the position. By fastening the fixed valve 417 shown in Figs. 18 to 19 into an outer peripheral surface of the shaft 401 through a screw hole formed on the sleeve portion 414, it is also possible to maintain the shaft 401 in a fixing state and to hold the hydroelectric power generating equipment 400 in an almost vertical power generating position irrespective of a water flow or a foreign substance.

According to the invention based on the example described above, in brief, the frame to be the supporting means for supporting the water turbine to be rotated in a reverse direction with respect to the water flow (a two-way direction) is supported rotatably around a shaft serving as a fulcrum point between a power generating position in which both of the water turbines are set into an immersed state and a flip-up position in which they are flipped up therefrom, and is usually held in the power generating position by the holding means. When a moment of rotation in the flip-up direction exceeds a predetermined value, the frame is flipped up, thereby preventing the damage of the hydroelectric power generating equipment 400 or exposing both of the water turbines from a water surface when requiring a maintenance. By additionally providing the water level flip-up sensor plate 413, moreover, it is possible to generate the moment of rotation in the flip-up direction with respect to the water flow in rising water, thereby promoting the flip-up. Fig. 23 schematically illustrates a power generating state, a flip-up state and a situation of returning into a power generating position.

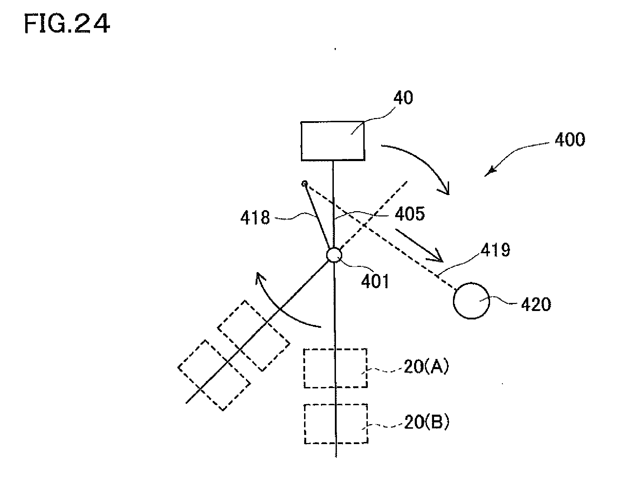

In the example, there is described, as an example, the structure in which the frame 405, and furthermore, the hydroelectric power generating equipment 400 usually generate the moment of rotation in the flip-up direction and the hydroelectric power generating equipment 400 is returned to an almost vertical power generating position through the arm 406, the wire 407 and the winch 408 against the moment of rotation. As shown in Fig. 24, however, the frame 405 placed usually in the vertical power generating position can also be flipped up by means of a winch 420 through an arm 418 and a wire 419 which are integrated therewith.

A further example will be described. As shown in Fig. 24, a lower part of the frame 405 serving as the hydraulic turbine supporting means includes frame cross members 420, 421 and 422 in order from a lower side in such a configuration as to interpose the two water turbines 20 between upper and lower parts, and these are constituted integrally with an axial portion 423 of the frame 405. The first water turbine 20 (A) on the upper side is interposed between the frame cross members 420 and 421 and is rotatably supported through a bearing which will be described below. Moreover, the second water turbine 20(B) on the lower side is interposed between the frame cross members 420 and 421 and is rotatably supported through a bearing which will be described below. A water flow guiding member 424 for changing a direction of the current flow F toward the outer peripheral side of the first water turbine 20(A) and guiding the current flow F is fixed in a shape of a longitudinal type plate through the frame cross members 421 and 422 to be a part of the frame 405. Moreover, a water flow guiding member 425 for changing the direction of the water flow F toward the outer peripheral side of the second water turbine 20(B) and guiding the water flow F is fixed by the frame cross members 421 and 422 forming a part of the frame 405 in the same manner.

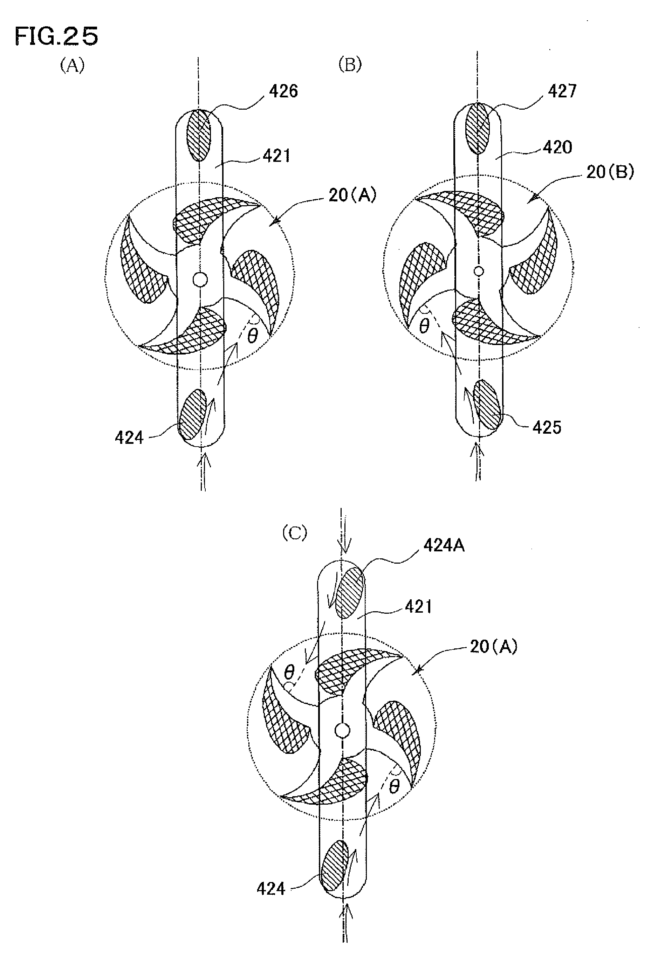

As shown in Fig. 25, the water flow guiding member (blade) in an upper stage functions to bend the water flow in such a manner that the water flow collides with a vane surface (a concave curved surface) which is curved like a concave portion in the first water turbine 20 (A) at an angle which is as close to a right angle as possible. Consequently, the water flow is caused to collide with the concave curved surface of the first water turbine 20 (A) at an angle θ (which is referred to as a pressure angle). Thus, a rotational driving force of the first water turbine 20 (A) is increased, and it is possible to expect the function for relieving an occurrence of a reversal running torque (a resisting torque opposing an original rotating direction) in the water turbine 20(A). Referring to the first water turbine 20(A), a straightening member 426 is supported on the frame cross members 421 and 422 at an opposite side to the water flow guiding member 424 (a downstream side). The straitening member (blade) 426 is positioned with non-inclination on a center in a transverse direction in a longitudinal direction of the frame cross member 421 or the like and functions to straighten the water flow passing through the first water turbine 20(A).

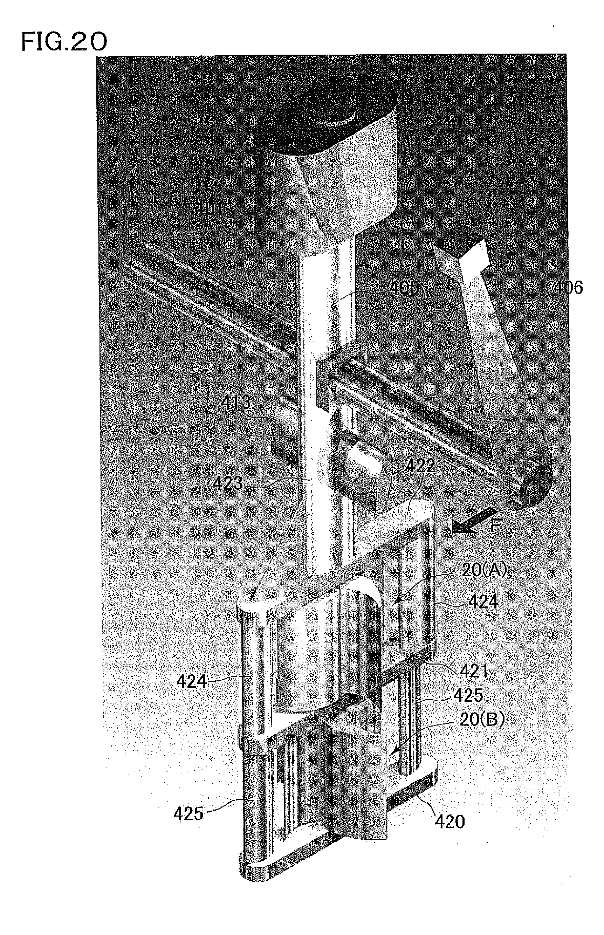

As shown in Fig. 25(B), similarly, the water flow guiding member 425 (blade) is provided with an inclination in a reverse direction to the blade (424) in the upper stage corresponding to the second water turbine 20 (B) in the lower stage, and the direction of the water flow is changed in such a manner that the water flow collides with the concave curved surface of the second water turbine 20(B) at an angle (a pressure angle) θ which is as close to a right angle as possible. Moreover, a straightening member (blade) 427 for performing a straightening function over the water flow passing through the second water turbine 20(B) is fixed between the frame cross members 420 and 421 in the same manner as in the upper stage. Fig. 20 shows the frame 405 seen from the downstream side. The respective water flow guiding members 424 and 425 and the straightening members 424 and 425 which take a blade configuration have the same height as the first water turbine 20(A) and the second water turbine 20(B) respectively, and are opposed to the respective water turbines 20 (A) and 20 (B) in respective intervals (clearances) on the upstream and downstream.

In the example described above, in brief, the water flow guiding member for changing the orientation of the water flow to increase the pressure angle at which the water flow collides with the vane surface (the concave curved surface) curved like a concave portion in the water turbine is provided in the water turbine supporting means at the upstream side of the water turbine. Moreover, it is possible to provide a straightening member along the water flow (which does not change the orientation of the water flow) at the downstream side of the water turbine if necessary.

In the case in which the hydroelectric power generating equipment 400 is immersed in the sea in place of a river or a waterway and a tidal current or a wave current is utilized to generate a power, the orientation of the water flow is successively reversed. Correspondingly, a water flow guiding member for guiding a water flow to increase a pressure angle into a vane surface (a concave curved surface) curved in a concave shape of the water turbine can also be provided on the upstream and downstream sides of the water turbines 20 (A) and 20 (B), respectively. Fig. 25 (C) is common to the water turbines 20(A) and (B), and shows an example in which the water flow guiding members 424 and 424A are inclined at an equal angle on both sides with the water turbine 20 interposed therebetween and are disposed symmetrically (are provided point symmetrically with respect to centers of the water turbines 20(A) and 20(B)).

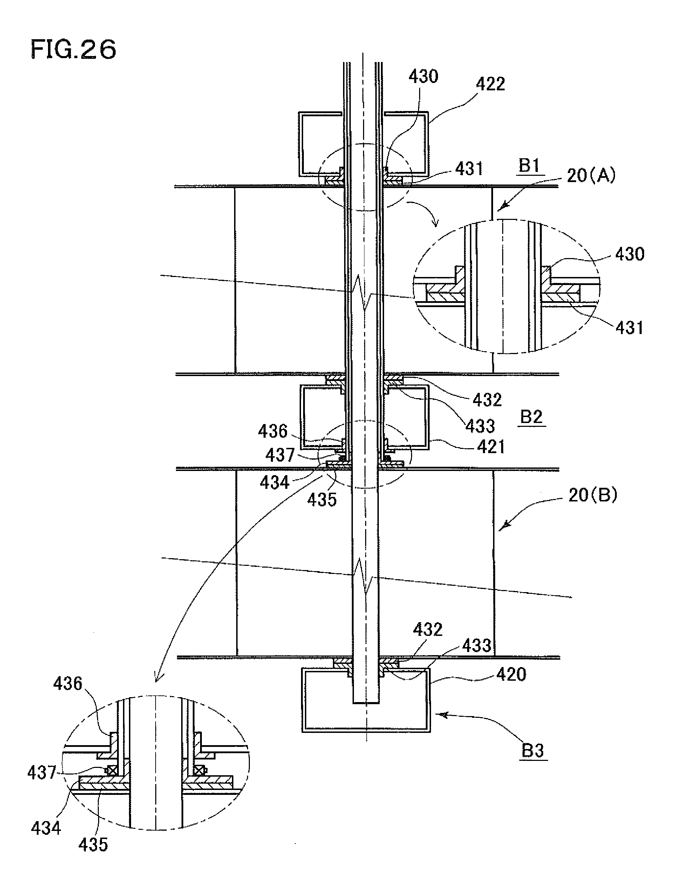

In Fig. 25, the first water turbine 20(A) and the second water turbine 20(B) are supported rotatably by means of bearings in B1 and B2, and B2 and B3 , respectively. Fig. 26 is a sectional view showing the B1 to B3 portions which are enlarged. Herein, the first water turbine 20 (A) is rotatably supported in an interposing state between the frame members 422 and 421 at both ends in a vertical direction by means of sliding bearings 430 and 433 formed of a resin and opposed to each other through sliding bearings 431 and 432 taking a shape of a disk and formed of a resin. The sliding bearings 430 and 433 formed of a resin are flat and cylindrical members having a flange. The sliding bearings 430 to 433 formed of a resin are constituted by an engineering plastic, for example a rigid resin including a carbon fiber and having a low friction, or the like, and serve as thrust bearings and radial bearings.

Referring to the second water turbine 20(B), the bearing portion on the lower side is supported by the same sliding bearings 432 and 433 formed of a resin as in the first water turbine 20 (A). In the upper part of the second water turbine 20 (B), a sliding bearing 436 having a flange, taking a cylindrical shape and formed of a resin is provided as the radial bearing and sliding bearings 434 and 435 formed of a resin are provided as the thrust bearing. The sliding bearing 434 having a flange, taking a cylindrical shape and formed of a resin is fixed to a shaft (a rotating cylinder) of the first water turbine 20 (A) through a set collar 437 and a screw (or welding). By providing the sliding bearing formed of a resin, it is also possible to obtain a simple structure, a high durability and an easy maintenance different from a roller bearing.

Any one of the three separate examples described with reference to Figs. 15 to 26 can also be employed and at least two of them may be employed in a proper combination. Furthermore, it is also possible to have all of the three structures. For example, in the case in which two of them are combined properly, it is possible to appropriately employ a combination of the flip-up method and the water flow guiding member, a combination of the flip-up method and the sliding bearing formed of a resin or a combination of the water flow guiding member and the sliding bearing formed of a resin, and it is also possible to properly combine them and the examples shown in Figs. 1 to 14. For instance, it is also possible to provide the water flow guiding member or the sliding bearing formed of a resin (the flip-up method is not employed) with respect to the examples of Figs. 1 to 14.

### EXPLANATION OF REFERENCES

- 1: hydroelectric power generating equipment
- 10: protecting frame
- 20(A): first water turbine
- 20(B): second water turbine
- 22: water turbine vane
- 26: front vane surface
- 28: rear vane surface
- 50: second rotating shaft
- 52: first rotating shaft
- 40: power generator
- 42: support beam
- 101: field magnet
- 102: power generating coil
- 140: guide frame (assembly guide body)
- 241: first rotor
- 242: second rotor
- 261: high speed water flow passing surface
- 262: low speed water flow passing surface
- 263: curved nose portion
- 300: water turbine power generating assembly
- 301: assembly support portion
- WF: power generating water flow

## Claims

1. Hydroelectric power generating equipment comprising:
a water turbine having a plurality of water turbine vanes disposed integrally and rotatably around a rotating shaft which intersects with a water surface of a power generating water flow;
a power generator attached to an upper end side of the rotating shaft of the water turbine in such a configuration that a whole body is positioned above the water surface for converting a rotation energy of the water turbine into an electric power; and
water turbine supporting means for supporting the water turbine and the power generator in such a manner that at least lower end sides of all of the water turbine vanes in an axial direction of the rotating shaft are simultaneously immersed in the power generating water flow.

2. The hydroelectric power generating equipment according to claim 1, wherein the water turbine is constituted, in an orthogonal section to an axis of the rotating shaft, in such a manner that the water turbine vane is set to have a concave curved surface in which the rear vane surface is retracted to a forward side in the reference rotating direction, the front vane surface is set to be a convex curved surface which is protruded to the forward side in the reference rotating direction and has a greater curve depth than the rear vane surface, and the front vane surface has a curvature which is a maximum in a curved nose portion and is decreased from the curved nose portion toward the vane inner edge side and the vane outer edge side respectively, takes a shape of a flow line in which a length of a first surface reaching the vane outer edge from the curved nose portion is greater than a length of a second surface reaching the vane inner edge similarly, the first surface and the second surface are formed to function as a high speed water flow passing surface and a low speed water flow passing surface respectively in such a manner that a speed of a relative water flow generated along the first surface from the curved nose portion toward the vane outer edge is higher than that of a relative water flow generated along the second surface toward the vane inner edge similarly when a relative water flow is received from the forward side in the reference rotating direction at the front vane surface, and a lift torque based on a difference in a flow speed of the relative water flow between the high speed water flow passing surface and the low speed water flow passing surface which is generated in the water turbine vane is generated in such an orientation as to rotate the water turbine vane in the reference rotating direction at the rear vane surface side.

3. The hydroelectric power generating equipment according to claim 1 or 2, wherein the water turbine includes a first water turbine which is disposed in such a configuration that a rotating axis is coincident with a first position on a reference axis, and carries out a rotation in a first direction upon receipt of the water flow, and a second water turbine which is disposed in a second position set below the first position over the reference axis and carries out a rotation in a reverse direction to the first water turbine upon receipt of the water flow, and
the power generator includes a first rotor which is provided with a field magnet and carries out a rotation integrally with one of the first water turbine and the second water turbine, and a second rotor which carries out a rotation integrally with the other of the first water turbine and the second water turbine in a reverse direction to the first rotor and is provided with a power generating coil to be excited by the field magnet.

4. The hydroelectric power generating equipment according to claim 3, wherein a first rotating shaft constituting a rotating shaft of the first water turbine is formed cylindrically and an upper end of the first rotating shaft is coupled to one of the first rotor and the second rotor so as to be integrally rotatable, while an upper end of a second rotating shaft constituting a rotating shaft of the second water turbine is coupled to the other of the first rotor and the second rotor so as to be integrally rotatable, and a lower end side of the second rotating shaft coaxially penetrates through an inner part of the first rotating shaft taking a cylindrical shape and is coupled to the second water turbine so as to be integrally rotatable.

5. The hydroelectric power generating equipment according to claim 4, wherein the power generator is constituted as an axial gap type power generator in which the power generating coils constituted to be coreless and flat are arranged around the rotating axis in a configuration in which the axial direction is coincident with the direction of the rotating axis in the second rotor, and the field magnets are arranged around the rotating axis in a magnetization configuration in the direction of the rotating axis in the first rotor in such a manner that the power generating coil and the field magnet are opposed to each other in such a configuration as to form an air gap in the direction of the rotating axis,
the first rotating shaft of the first water turbine is connected to the first rotor and the second rotating shaft of the second water turbine is connected to the second rotor, and
the first rotor includes a disk-shaped rotor body having an opposed surface to the power generating coil of the second rotor to which the field magnet is attached, the first rotating shaft is coupled to the rotor body so as to be integrally rotatable, and a disk-shaped auxiliary roller body is provided for the power generating coil of the second rotor in an opposed configuration to the rotor body from an opposite side in an axial direction, an auxiliary field magnet having a reverse polarity to the field magnet is attached into a corresponding position to the field magnet at the rotor body side in an opposed surface of the auxiliary rotor body to the power generating coil, the rotor body and the auxiliary rotor body are coupled to be integrally rotatable by a peripheral wall portion surrounding the second rotor in a circumferential direction at an outer peripheral edge, and the rotor body, the peripheral wall portion and the auxiliary rotor body constitute a field yoke formed by a soft magnetic metal material.

6. The hydroelectric power generating equipment according to any one of claims 1 to 5, wherein the water turbine vane is formed as a structure having a smaller apparent specific gravity than water.

7. The hydroelectric power generating equipment according to claim 6, wherein the water turbine vane has an outer surface portion formed by a hollow metal shell.

8. The hydroelectric power generating equipment according to claim 7, wherein the water turbine vane has an inner part of the metal shell which is filled with a resin filling material having a smaller apparent specific gravity than water.

9. The hydroelectric power generating equipment according to any one of claims 1 to 8, wherein the water turbine supporting means has a power generator supporting portion fixed to a support base which cannot be moved relatively with the water flow and supports the power generator above the water surface, and the water turbine is attached to the power generator supported on the power generator supporting portion in a suspending configuration at the upper end of the rotating shaft.

10. The hydroelectric power generating equipment according to claim 9, wherein the water flow is formed in a waterway having a quay wall at both sides in a transverse direction of the flow, and the power generator supporting portion includes a support beam having both ends supported in such a configuration that each of the quay walls in the waterway is set to be the support base, and a power generator attaching portion which is provided in a middle position in a longitudinal direction of the support beam and to which the power generator is attached.

11. The hydroelectric power generating equipment according to claim 10, wherein a protecting frame is provided below the power generator attaching portion, the protecting frame protecting a periphery of the water turbine fixed to the power generator attached to the power generator attaching portion in the suspending configuration while permitting a passage of a water flow.

12. The hydroelectric power generating equipment according to claim 11, wherein a bottom part of the protecting frame is provided with a bearing for rotatably supporting the lower end of the rotating shaft of the water turbine.

13. The hydroelectric power generating equipment according to any one of claims 1 to 8, wherein the water turbine supporting means has a buoyancy applying portion for applying a buoyancy in such a manner that all of the water turbine vanes are simultaneously immersed in a state in which at least the lower ends in the axial direction of the rotating shaft do not come in contact with a water bottom with respect to the power generating water flow for a water turbine power generating assembly integrating the power generator with the water turbine, while the whole power generator is positioned above the water surface, and serves to support the water turbine power generating assembly in a floating configuration with respect to the water surface.

14. The hydroelectric power generating equipment according to claim 13, wherein the water turbine vane is formed as a structure which has a smaller apparent specific gravity than water, and is also used as the buoyancy applying portion.

15. The hydroelectric power generating equipment according to claim 14, wherein the water turbine power generating assembly includes a power generator attaching portion having an upper surface side to which the power generator is attached, a protecting frame is provided below the power generator attaching portion, the protecting frame protecting a periphery of the water turbine fixed to the power generator attached to the power generator attaching portion in the suspending configuration while permitting a passage of a water flow, and the buoyancy applying portion serves to apply the buoyancy in such a manner that the protecting frame does not come in contact with the water bottom together with the water turbine.

16. The hydroelectric power generating equipment according to claim 15, wherein a bottom part of the protecting frame is provided with a bearing for rotatably supporting the lower end of the rotating shaft of the water turbine.

17. The hydroelectric power generating equipment according to any one of claims 13 to 16, wherein a assembly support portion for supporting the water turbine power generating assembly disposed in a floating configuration over the water surface in order to regulate a movement in the direction of the water flow and to permit a vertical movement depending on a water level is provided in such a form as to be fixed to a support base which cannot be moved relatively with the water flow.

18. The hydroelectric power generating equipment according to claim 17, wherein the water flow is formed in a waterway having a quay wall at both sides in a transverse direction of the flow, and the assembly support portion includes a support beam having both ends supported in such a configuration that each of the quay walls in the waterway is set to be the support base, and an assembly guide body which is integrated in a suspending configuration in a middle position in a longitudinal direction with respect to the support beam and guides a vertical movement depending on a water level while regulating a movement of the water turbine power generating assembly in the direction of the water flow.

19. The hydroelectric power generating equipment according to any one of claims 1 to 8, wherein the water turbine supporting means includes a frame for rotatably supporting the water turbine, and a shaft for rotatably supporting the frame in a power generating position in which the water turbine is immersed to carry out a power generation and a flip-up position which is rotated upward from the power generating position and in which the water turbine is exposed from a water surface in a middle position in a vertical direction of the frame.

20. The hydroelectric power generating equipment according to any one of claims 1 to 8, wherein the water turbine supporting means includes a frame for rotatably supporting the water turbine, and a shaft for rotatably supporting the frame in a power generating position in which the water turbine is immersed to carry out a power generation and a flip-up position which is rotated upward from the power generating position and in which the water turbine is exposed from a water surface in a middle position in a vertical direction of the frame, and further includes holding means for holding the frame in the power generating position by a predetermined holding force, and the frame is rotated from the power generating position to the flip-up position when a moment of rotation exceeding the holding force of the holding means acts on the frame.

21. The hydroelectric power generating equipment according to claim 2, wherein the water turbine supporting means is provided with a water flow guiding member which is positioned on an upstream side of the water turbine with respect to a power generating water flow and changes an orientation of the water flow in order to increase a pressure angle at which the water flow collides with a concave curved surface of the water turbine and guides the water flow to the concave curved surface.
